(19) **Europäisches Patentamt**

**European Patent Office**

**Office européen des brevets**

(11) **EP 1 018 639 A1**

(12) **EUROPEAN PATENT APPLICATION**
published in accordance with Art. 158(3) EPC

(43) Date of publication:
**12.07.2000 Bulletin 2000/28**

(51) Int. Cl.⁷: **G01G 3/14**, G01G 21/23,
G01G 21/28

(21) Application number: **99925285.1**

(22) Date of filing: **09.06.1999**

(86) International application number:
**PCT/JP99/03072**

(87) International publication number:
**WO 00/06977 (10.02.2000 Gazette 2000/06)**

(84) Designated Contracting States:
**DE FR GB IT**

(30) Priority: **28.07.1998 JP 21226798**

(71) Applicant:
**Citizen Watch Co., Ltd.
Tokyo 163-0428 (JP)**

(72) Inventors:
• **NAKAGAWA, Yoshiyuki,
Citizen Watch Co., Ltd.
Tanashi-shi, Tokyo 188-0011 (JP)**
• **SATO, Toshiharu,
Citizen Watch Co., Ltd.
Tanashi-shi, Tokyo 188-0011 (JP)**
• **NAGASHIMA, Mitsuyoshi,
Citizen Watch Co., Ltd.
Tanashi-shi, Tokyo 188-0011 (JP)**

(74) Representative:
**Moir, Michael Christopher et al
Mathys & Squire
100 Gray's Inn Road
London WC1X 8AL (GB)**

(54) **WEIGHING MACHINE**

(57) A thin weighing machine (40) simple in structure, small in thickness, and high in long-term reliability, wherein a weight applied to a loading table (30) is applied distributedly to a plurality of pivots, the load is supported by the plurality of pivots, the load is applied concentratedly to a sensitive part (205) by a plurality of load transmission beams (230), and the strain or deformation of the sensitive part (205) is received as an electrical change for calculating a weight, and a one-sheet straining plate (20) having the sensitive part (205), the load transmission beams (230) in communication with the sensitive part (205), and a load supporting part (203) is provided with two vertical grooves (208) sandwiching the sensitive part (205) and one lateral groove (209) passing the sensitive pert (205) so as to form an integral construction.

Fig. 2

EP 1 018 639 A1

## Description

FIELD OF THE INVENTION

The present invention relates to a weighing scale, and more particularly to a thin weighing scale for such applications as measuring the weight of a person.

BACKGROUND TECHNOLOGY

The method of load detection used in most weighing scales in the past, and particularly in those used to measure body weight has been one in which the load from a platform on which the subject of the measurement rests is transferred to and centralized at one point by means of a load-transmitting mechanism made of a plurality of metal plates (hereinafter referred to as a lever-type scale), this centralized load causing deformation of a metal deformable plate, this deforstion being detected as a change in the value of resistance of a strain gauge attached to the deformable plate, or as a change in the value of electrostatic capacitance caused by a change in the distance between two electrode plates resulting from displacement of the deformable plate, the result being converted to a load.

In the above load-transmitting mechanism of a lever-type scale, the metal load-transmitting plates provided on the reverse side of the platform and the long metal plate (hereinafter referred to as a lever-type metal plate) that centralizes the received load are generally in mutual contact via a knife edge.

In order to transmit the load vertically, it is necessary to use a mechanism with the minimum possible friction.

In order to tolerate the load applied from the platform, the above-noted lever-type metal plate must be used in combination with a vertically aligned metal plate and it is additionally necessary the lever-type metal plate that transmits a load from the platform to the lever-type metal plate be configured as a knife edge, thereby usually causing the thickness of the scale to exceed 35 mm.

Because the metal load transmitting plate and lever-type metal plate are in contact via a knife edge so as to transmit the load, and thus a very large pressure is applied to the knife edge part contacting threrto.

The result is that repeated use causes deformation and wear, making it impossible to achieve long-term reliability.

Additionally, in order to tolerate the applied load the lever of a lever-type scale the above-noted lever-type metal plate must be used in combination with a vertically aligned metal plate and it is additionally necessary the lever-type metal plate that transmits a load to the lever-type metal plate be configured as a knife edge, thereby making it extremely difficult to achieve a thickness smaller than 35 mm.

More specifically, when a thick weighing scale is left on the floor, it can be tripped over, thereby causing it to be stored away in a closet and used more less frequently.

In order to achieve a thin-profile scale so as to solve the above-noted problem, there have been several proposals, including a single-plate lever-type scale disclosed in the Japanese Examined Utility Model Publication (KOKOKU) No. 61-36891 and the Japanese Unexamined Patent Publication (KOKAI) No. 7-260553, for example.

In all of these, however, the fact that the sensor is subjected to a compound strain including both vertical and horizontal strain, causes detection error in the strain gauge that is used, so that the scales did not detect the load accurately.

According, it is an object of the present invention to solve the above-noted problems by providing a thin-profile weighing scale of simple construction and which features long-term reliability.

DISCLOSURE OF THE INVENTION

To achieve the above-noted object, the present invention adopts the following basic technical constitution.

Specifically, a first aspect of the present invention is a weighing scale comprising a deformable plate that measures a weight, wherein a weight applied to a platform is distributed and applied to a plurality of weight points provided on a plurality of load receivers, the load being supported by a plurality of pivot points, and a plurality of load-transmitting beams being used to centralize the load and cause a sensor to operate, the strain or deformation in the sensor being sensed as a change in an electrical quantity, this weighing scale having a single deformable plate, which is integrally formed together with at least a receiving sensor that includes a strain sensing means, a load-transmitting beam that communicates with the receiving sensor, and a load receiver, and further wherein the single deformable plate has minimally on a first surface thereof a second groove (central horizontal groove) that includes the receiving sensor and is formed in a direction (second direction) that is parallel to a straight line which joins the center points of the plurality of load receivers.

A second aspect of the present invention is a weighing scale comprising a platform, a bottom plate, and a single deformable plate provided between the platform and the bottom plate, the deformable plate being provided with a plurality of load receivers being arranged in a vicinity of an end of the deformable plate and which receive in a distributed manner a load applied to the platform, a receiving sensor that includes a strain sensing means provided in substantially the center part of the deformable plate, and a load-transmitting beam that transmits a load applied to the load receiver to the proximity of the receiving sensor, wherein the receiving sensor, in response to a load applied to the platform, detects an amount of displacement near the center part of the deformable plate, via a strain gauge.

In the deformable plate of the weighing scale of the present invention, the deformable plate is provided with a first groove in a prescribed direction, so that when a prescribed load is applied to the load receiver, a substantially center part of the deformable plate bends in a predetermined direction.

And further in the deformable plate of the weighing scale of the present invention, mutually joined end parts of a pair of load-transmitting beams making up the deformable plate are configured so as to be displaced downward in response to an amount of load.

A third aspect of the present invention is a thin type weighing scale comprising a platform, a bottom plate, and a single deformable plate provided between the platform and the bottom plate, the deformable plate being provided with a plurality of load receivers being arranged in a vicinity of an end of the deformable plate and which receive in a distributed manner a load applied to the platform, a receiving sensor that includes a strain sensing means provided in substantially the center part of the deformable plate, and a load-transmitting beam that transmits a load applied to the load receiver to the proximity of the receiving sensor, wherein the receiving sensor, in response to a load applied to the platform, detects an amount of displacement near the center part of the deformable plate, via a strain gauge, and further wherein the deformable plate and the bottom plate are integrally formed.

That is, in the above-noted weighing scale of the present invention, a weight applied to the platform is distributed and received at a plurality of weight points and supported at a plurality of pivot points, whereby a plurality of load-transmitting beams (levers) centralizing the load so as to cause It to act on the receiving sensor, this being senses as either strain or deformation in the receiving sensor or a change in an electrical quantity, a single deformable plate provided with a receiving sensor, a load-transmitting beam that communicates with the receiving sensor, and a plurality of load receivers are integrally formed and has a single second groove, this being a lateral center groove.

In the first aspect of the present invention, the deformable plate is a single rigid body, with the edge hinge groove and center groove (second groove) being all formed integrally therewith, so that when a prescribed load is applied to the deformable plate, the directions of flexing at the edge of the hinge groove and the center groove are the same, so that it is possible to accurately and without any loss transmit an applied load to the receiving sensor.

That is, in the first aspect of the present invention, if the load-transmitting beam has sufficient rigidity and thickness in the part with no groove, there is no compound deformation of the load-transmitting beam by a compound force having both horizontal and vertical force components included in the stress transmitted to the load-transmitting beam from the receiving sensor, so that only the second center groove that is the second groove, which passes through the receiving sensor, receives the effect of the vertical strain so as to become deformed, resulting in the receiving sensor detecting only vertical strain.

It is, therefore, possible to obtain a stable, reliable output.

Additionally, because this single deformable plate is integrally formed, including the load receivers and receiving sensor, there is no contacting mechanism such as the knife edge of the conventional lever-type scale, which is subject to deformation and wear over long use, thereby enabling the achievement of a thin-profile weighing scale with good long-term stability, and good repeatable reliability.

In particular, in another example related to the first aspect of the present invention, in addition to the weighing scale configuration noted above, a single first groove (vertical groove) that includes the receiving sensor is provided in parallel to the a first direction (vertical direction) that is perpendicular to the second direction (horizontal direction) on a first surface of the single deformable plate of the present invention.

In yet another example, in addition to the weighing scale configuration noted above, at least two parallel third grooves (vertical grooves) are provided so as to surround the receiving sensor and in parallel with a first direction that is perpendicular to the second direction.

That is, in the above-noted example of the present invention, even if the load-transmitting beam is so thin that it could not act as a rigid body, since the single deformable plate, by means of two vertical grooves (first and third grooves) and a single center horizontal groove (second groove), is divided into six regions and each of the grooves are so deformed along each of the grooves, so that the two vertical grooves surrounding the receiving sensor receive the centralized horizontal strain and are mainly deformed with receiving strain, the result being that all the load-produced strain is received by the receiving sensor provided at a center bottom of the lateral groove, that is a center second groove, as only a strain that deforms the vertical groove, this means that the receiving sensor can detect only the strain in lateral direction isolated from the train in the vertical direction.

The receiving sensor, therefore, receives only vertical-direction strain, enabling a stable, reliable output.

That is, in the first embodiment of the present invention, the second groove in the center groove serves to detect a second strain in a direction (first direction) that is perpendicular to the second groove, along the second groove.

Stated differently, the second lateral groove, the center groove does not detect a first strain in a direction (second direction) that is perpendicular to the first and third grooves along the first and third grooves (vertical grooves).

In another example of the first aspect of weighing scale according to the present invention, the second groove, which passes through the receiving sensor in the single deformable plate, has a cross-sectional shape in the longitudinal direction of the second groove that is an upwardly opened V, U, or rectangle.

According to this example, the detected amount of deformable plate strain at the center of the single deformable plate, this being the output voltage responsive to this amount of strain, was seen to be dependent upon the cross-sectional shape of the center horizontal (second) groove, and it is possible to achieve a better strain gauge output by using a V shape rather than an open rectangle shape.

According to a U-shaped groove in the present invention, there is a further increase in the strain in the deformable part at the center, compared to the case of a V-shaped groove, enabling a further improvement of the strain gauge output.

In this example of the present invention, a second groove (center horizontal groove) is formed in both the front and reverse surfaces of the single deformable plate, and strain-sensing means are disposed in the receiving sensors parts of each, so as to enable yet a further improvement in strain gauge output.

In another example of a weighing scale according to the first aspect of the present invention, with the receiving sensor of the single deformable plate as a center, if an axis in a direction that is parallel to a straight line that connects the center points of the plurality of load receivers, passing through this center and including the receiving sensor is a first axis, and an axis in a direction that is perpendicular to the first axis at the above-noted center is a second axis, the weighing scale is designed so that the single deformable plate has a shape that has line symmetry with respect to the first and second axes.

By adopting this configuration, if the single deformable plate is considered to be divided into four regions representing first, second, third, and fourth quadrants, divided in the horizontal and vertical directions, regardless of which quadrant a load center is located, the deformation and strain amount of the receiving sensor will be the same, enabling maintenance of a stable output, even in the case of an extremely unbalanced load.

Another example of a weighing scale according to the first aspect of the present invention, is one in which the second groove (center horizontal groove) is provided on the second surface, which is opposite the first surface of the single deformable plate, in a position that is opposite the position of a second groove, which is a center horizontal groove provided on the first surface.

In this example, the receiving sensor is provided on both surfaces of the single deformable plate.

More specifically, in this example, strain gauges for the purpose of sensing strain are affixed to the center bottom of the front side horizontal groove and the reverse side center horizontal groove of the single deformable plate, the load that is applied to the platform and transmitted to the receiving sensor being detected as tensile strain or compression strain in the receiving sensor.

According to the present invention, because tensile strain generated on one surface of the receiving sensor and compression strain generated on the other surface of the receiving sensor are detected by strain gauges affixed to these surfaces, respectively, the non-linearities exhibited by the tensile strain gauge on the tensile strain surface and the tensile strain gauge on the compression strain surface cancel each other, thereby enabling an output with extremely good linearity.

By adopting the above-described technical constitution, a weighing scale according to the first aspect of the present invention is one in which a weight applied to a platform is applied to a plurality of weight points in a distributed manner, and supported by a plurality of pivot points, a plurality of load-transmitting beams (levers) causing the load to act in centralized manner at a receiving sensor, this being sensed as a strain of the receiving sensor or a change in an electrical quantity, this scale having a single deformable plate provided with a receiving sensor, a load-transmitting beam that communicates with the receiving sensor, and a load receiver, the single deformable plate either being an integral structure having a single center horizontal groove (second groove) passing through the receiving sensor, or having a single center horizontal groove (second groove) passing through the receiving sensor and a single vertical groove (first groove) passing through the receiving sensor, or two vertical grooves (first groove and third groove) surrounding the receiving sensor.

A weighing scale according to the second and third aspects of the present invention are a weighing scale according to the first aspect, but with a simplified configuration, having no difference in accuracy of applied load detection and, compared to the method of mounting using a screw, featuring a lower manufacturing cost and the ability to prevent skew in the output value of detected load.

BRIEF DESCRIPTION OF THE DRAWINGS

Fig. 1 is a perspective view showing an example of a single deformable plate used in a weighing scale according to the first embodiment of the present invention.
Fig. 2 is an exploded perspective view showing the configuration of an example of a weighing scale according to the first embodiment of the present invention.

Fig. 3 is a drawing illustrating an example of the configuration of a strain detection means in a single deformable plate used in a weighing scale according to the first embodiment of the present invention.

Fig. 4 is a perspective view showing the configuration of another example of a single deformable plate in the first embodiment of the present invention.

Fig. 5 is a perspective view showing the configuration of yet another example of a single deformable plate in the first embodiment of the present invention.

Fig. 6 is an exploded perspective view showing the configuration of another example of a weighing scale according to the first embodiment of the present invention.

Fig. 7 is a drawing showing an example of the cross-section shape of a center horizontal groove in the first embodiment of the present invention.

Fig. 8 is a graph showing the relationship between the cross-section shape of the center horizontal groove and the strain detection characteristics in the first embodiment of the present invention.

Fig. 9 is a drawing showing an example of the case in which legs are installed on the outer frame of the single deformable plate in a weighing scale according to the first embodiment of the present invention.

Fig. 10 is a drawing showing an example of the case in which legs are installed on the bottom plate in a weighing scale according to the first embodiment of the present invention.

Fig. 11 is a cross-section view showing the configuration of an example of a weighing scale according to the second embodiment of the present invention.

Fig. 12 is a plan view showing the configuration of an example of a weighing scale according to the second embodiment of the present invention.

Fig. 13 is a plan view showing an example of a platform in a weighing scale according to the second embodiment of the present invention.

Fig. 14 is a plan view showing the configuration of an example of a single deformable plate used in a weighing scale according to the third embodiment of the present invention.

Fig. 15 is a graph showing a comparison of the output characteristics in another example of a single deformable plate in the third embodiment of the present invention, in comparison with the configuration of the past.

Fig. 16 is a plan view showing an example of the configuration of the bottom plate used in a weighing scale according to the third embodiment of the present invention.

Fig. 17 is a cross-section view showing an example of the configuration of a weighing scale according to the second and third embodiments.

Fig. 18 is a plan view showing an example of the method of joining the single deformable plate and bottom plate in the second and third embodiments of the present invention.

Fig. 19 is a side view showing an example of another configuration of a single deformable plate used in a weighing scale according to the second embodiment of the present invention.

Fig. 20 is a graph showing the characteristics values of weighing scales according to the first and second embodiments of the present invention, in comparison with a weighing scale of the past.

Fig. 21 is a graph showing the relationship of the output characteristics in a weighing scale according to the second embodiment of the present invention with and without a hinge groove.

Fig. 22 is a graph that shows the output characteristics of a weighing scale according to the second embodiment of the present invention for the case in which there is no hinge groove.

Fig. 23 is a graph that shows the output characteristics of a weighing scale according to the second embodiment of the present invention for the case in which there is a hinge groove.

Fig. 24 is a drawing showing an example of a method of linking the platform and the bottom plate in a weighing scale according to the second embodiment of the present invention.

DESCRIPTION OF THE PREFERRED EMBODIMENT

The configuration of an example of a weighing scale according to the first embodiment of the present invention is described in detail below, with references being made to drawings.

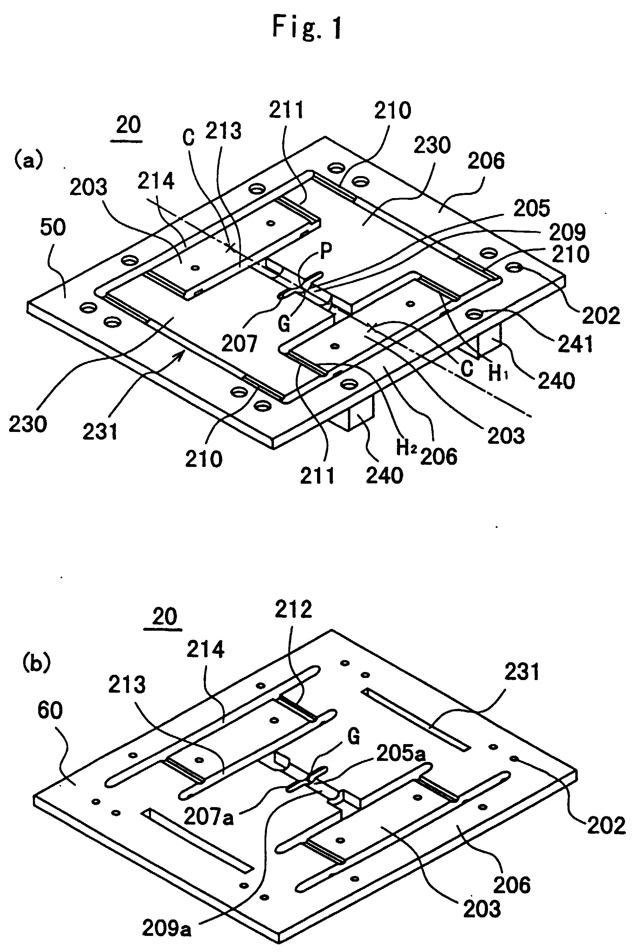

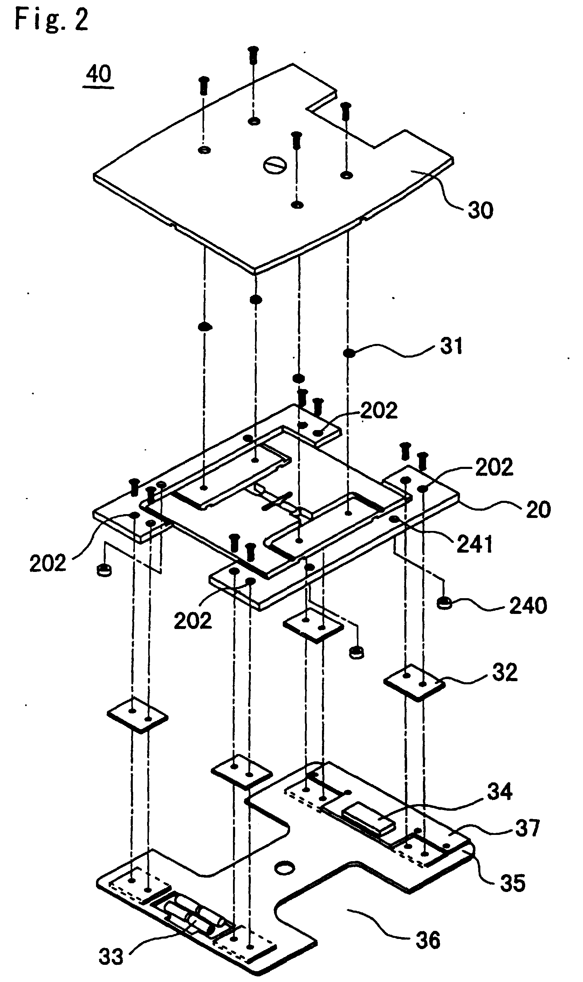

Specifically, Fig. 1 is a perspective view showing the configuration of a single deformable plate 20 used in a thin-profile weighing scale 40 shown in Fig. 2.

Fig. 1 (a) shows the configuration of the front surface of the single deformable plate 20 used, for example, in the weighing scale 40 shown in Fig. 2.

Fig. 1 (b) shows the configuration of the reverse surface thereof. This Fig. 1 (b) shows a single deformable plate 20 of a weighing scale 40, wherein a plurality of load receivers 203 that receive and support a load applied to a platform 30 in a distributed manner, a plurality of load-transmitting beams 230 centralize the load and cause it to act on a receiving sensor 205 having a sensing means G, this load being sensed as strain or deformation of the receiving sensor 205 or as a change in an electrical quantity.

This deformable plate 20 minimally has a receiving sensor 205 that includes a strain sensing means G, a load-transmitting beam 230 that communicates with the receiving sensor 205, and a load receiver 203, formed integrally therewith, and this single deformable plate 20 is further provided on its first surface 50 with a second groove 209 (center horizontal groove) formed in a direction (hereinafter referred to as the second direction) parallel with a straight line that joins the center points of the plurality of load receivers 203 and which includes the receiving sensor 205.

In the present invention, the direction perpendicular to the second direction, that is, the vertical direction, is defined as the first direction.

It is desirable that the single deformable plate 20 in the first embodiment of the present invention made of a single thin sheet formed of a metal such as aluminum, by means of a punch-press process, so that it is integrally formed.

In the first aspect of the present invention, the single deformable plate 20 used in a weighing scale 40, although the overall shape of the single deformable plate is not specified, it is desirable that it be substantially rectangular, as shown in the drawing.

To describe the configuration of the single deformable plate 20 in the first embodiment of the present invention in more detail, as shown in Fig. 1 (a), the single deformable plate 20 is provided with an outer frame 206 that forms the periphery thereof.

An outer slit 214 is formed inside of the outer frame 206 and formed so substantially in parallel to the outer periphery of the outer frame 206 in a direction that is substantially perpendicular to a direction (second direction) that is parallel to a straight line joining the plurality of load receivers 203 and which includes the receiving sensor 205, and an inner slit 213 is formed at a place closer to the center part P of the single deformable plate 20 than the outer slit 214 and which is formed substantially in parallel to the outer slit 214 or is formed at an arbitrary spacing from the outer slit 214 are formed.

A pair of mutually opposing edges H1 and H2 different from the opposing edges provided with the inner slit 213 and the outer slit 214 of the load receivers 203 are connected to the load-transmitting beam 230 connected to the horizontal outer groove 210 forming a first hinge of the outer frame 206 and to the horizontal inner groove 211 forming the second hinge thereof.

The center horizontal groove 209, which is the second groove of the single deformable plate 20 in the present invention includes the receiving sensor 205 at its center part and, although the length thereof is not particularly specified, it is possible to have this extend at a mutually equal distance along the second direction, about the receiving sensor 205 as the center.

In this example of the present invention, when the output of the receiving sensor 205 is caused to change, it is possible to cause the length or shape of the second groove, which is the center horizontal groove 209 to change.

In the first embodiment of the present invention, the load-transmitting beam 230 is connected to the outer frame 206 via the horizontal outer groove 210, which is machined so as to have a thickness that is thinner than the thickness of the main part of the single deformable plate 20.

That is, as shown in Fig. 1, the load-transmitting beam 230 is connected to the outer frame 206 via horizontal outer grooves 210 that are provided at four position.

In Fig. 1, the reference numeral 231 denotes a horizontal slit, which separates the outer frame 206 and the load-transmitting beam 230.

As noted above, the load-transmitting beam 230 is connected to the load receivers 203 via a horizontal center groove 211, which is machined so as to have a thickness that is thinner than the thickness of the main part of the single deformable plate 20.

Because the horizontal outer groove 210 and the horizontal center groove 211 function as hinges, the horizontal outer groove 210 will be called the first hinge, and the horizontal center groove 211 will be called the second hinge.

Therefore, in the single deformable plate 20 of the present invention, when a load is applied to the load receivers 203 which is partially separated from the main part of the single deformable plate 20 by the outer slit 214, the inner slit 213, and the horizontal slit 231, the load lever 203 causes the load-transmitting beam 230 to generate a force that is directed downward in the first direction and the second direction via each one of the hinge portions, the result being that the strain caused by the combined force is centralized to the receiving sensor 206 that is provided at the center point P of the second groove 209 from the four directions at the receiving sensor 205.

Therefore, the receiving sensor 205 breaks up this strain, making it possible to detect the load applied to the load receivers 203.

That is, the center groove 211 forms a hinge mechanism, and aids the deformation of the load-transmitting beam 230 about the horizontal outer groove 210 as a support point.

That is, when a load is received from the platform 30 by the load receivers 203, by means of the hinge mechanism formed by the horizontal center grooves 211 on both ends, rotational torque about the horizontal outer groove 210 as a pivot point is transmitted to the load-transmitting beam 230, so that the load-transmitting beam 230, to which a rotational torque is applied causes the other load-transmitting beams 230 in the three other locations to deform, along with the receiving sensor 205, thereby causing strain.

That is, the second groove in the single deformable plate 20 in the present invention, this being the center horizontal groove 209 functions so as to detect a second strain in a direction (first direction) that is perpendicular to the second groove (center horizontal groove) along the center horizontal groove 209, which is the second groove.

In the above-noted example of the present invention, it is desirable that at least one first groove (vertical groove) 207 that includes the receiving sensor 205 and is parallel to the first direction (vertical direction) perpendicular to the second direction (horizontal direction) be provided on the first front surface 50 of the single deformable plate 20.

This first groove (vertical groove) 207 is provided so as to efficiently transmit strain received by each of the load-transmitting beams 230 to the receiving sensor 205.

Fig. 1 (b) is a perspective view showing an example of the configuration of the reverse surface 60 of an example of a single deformable plate 20 using in a weighing scale 50 according to the present invention as noted above.

Specifically, in the reverse surface 60 of this single deformable plate 20, there are preferably provided parts each corresponding to at least a load-transmitting beam 203, and an outer slit 214, inner slit 213, horizontal slit 231 each of which forms a load-transmitting beam 203, and further preferably, a center horizontal groove 211 that links the load-transmitting beam 230 and the load receiver 203 as shown in Fig. 1 (a), at corresponding positions on the front surface.

A horizontal center groove 212 formed at a part corresponding to the horizontal center groove 211 forms a third hinge.

Additionally in this example of the present invention, it is desirable that there be provided on the reverse surface of the single deformable plate 20 as well a reverse center horizontal groove 209a and a reverse receiving sensor 205a having substantially the same shapes as the center horizontal groove 209, which is the second groove, and a receiving sensor 205 provided in the center part of this center horizontal groove 209, at positions that correspond to positions of the features provided on the front surface 50 of the single deformable plate 20.

In this example, therefore, there is of course a strain sensing means G provided at the reverse surface receiving sensor 205a as well.

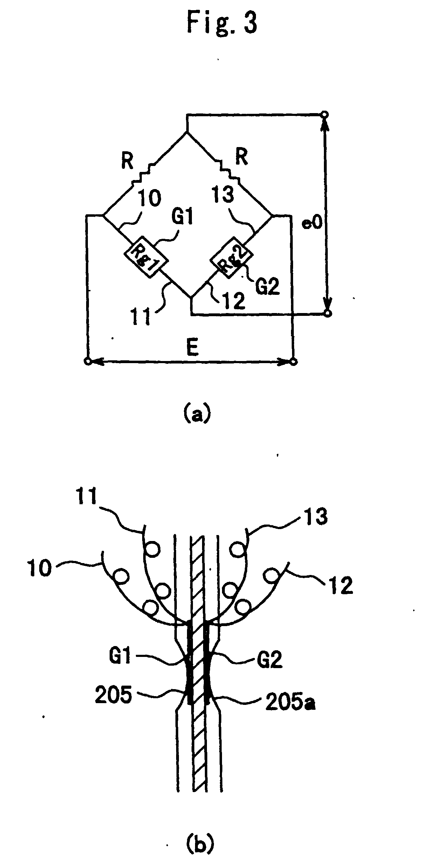

In the above-noted example of the present invention, it is the strain gauge G affixed to the receiving sensor 205 that detects the generated strain, an example of the configuration of this strain sensing means being shown in Fig. 3.

Specifically, Fig. 3 (a) shows an equivalent bridge circuit for the strain gauge, and Fig. 3 (b) shows a cross-section view of the configuration of the receiving sensor 205.

A front strain gate G1 is affixed to the front receiving sensor 205 and a reverse strain gauge G2 is affixed to the rear receiving sensor 205a. The signal lines 11 and 12 exit from the front strain gauge G1, an the signal lines 13 and 14 exit from the reverse strain gauge G2.

As shown in Fig. 3 (a), by electrically connecting these signal lines by joining them by fixed resistors R that face one another, it is possible to add the outputs of the strain gauges attributed to compression strain and tensile strain that are generated in the receiving sensors 205 and 205a in response to a received load and measure the added result.

However, in a case in which it is acceptable to have a small output, it is sufficient to affix a strain gauge to one side only, in which case in the position of a single strain gauge corresponding to either G1 or G2 a resistance of a value that is equivalent to the strain gauge affixed to the receiving sensor 205 is connected so as to form a bridge circuit.

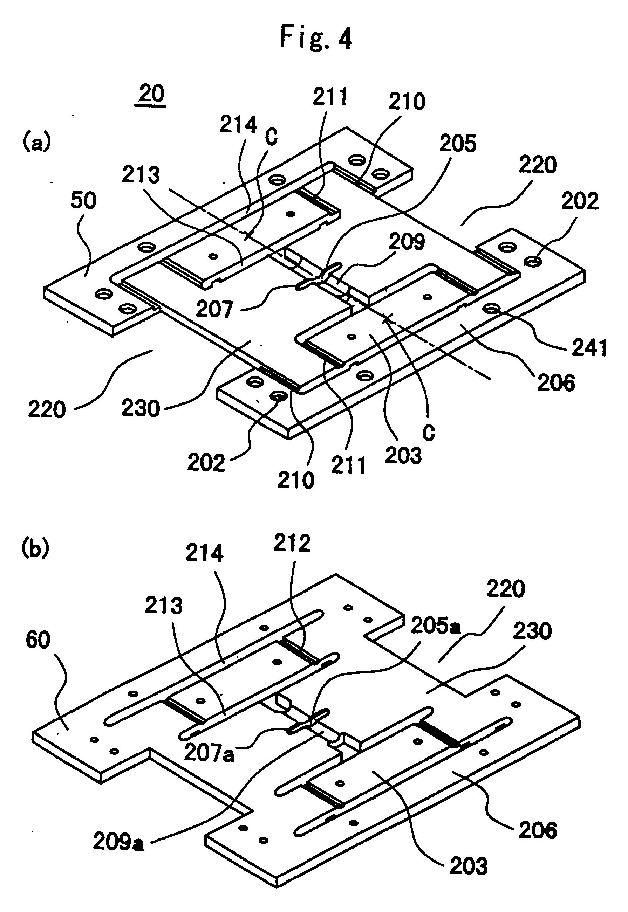

Next, another example of a single deformable plate 20 used in the first embodiment of the weighing scale 40 according to the present invention is shown in Fig. 4.

In this example, the basic configuration is substantially the same as the example of the single deformable plate 20 shown in Fig. 1, except that a partial cutout or hollow 220 is formed in the outer frame 206 of the single deformable plate 20.

That is, Fig. 4 (a) shows an example of a single deformable plate 20 used in the first embodiment of the present invention, this showing the shape of the surface part 50 of the single deformable plate 20.

In the outer frame 206 making up the outer periphery portion, a hollow 220 is formed in part of the outer frame 206 so as to be parallel to the first groove, that is, the center horizontal groove 209.

The slit or hollow 220 in this embodiment, as will be described later, forms a space for the placement of a processing circuit for executing detection data processing, a control circuit, a display circuit for displaying the calculated results, a display means, and a power supply or the light.

Fig. 4 (b) shows the shape of a reverse surface 60 of the single deformable plate 20 in the above-noted embodiment, this being substantially the same as the configuration shown in Fig. 1 (b), with the exception of the hollow 220.

While the weighing scale 40 according to the present invention, as shown in Fig. 2, is formed by a laminated combination of an appropriate platform 30 and a single deformable plate 20, if necessary it can be assembled with a laminated bottom plate 35 having a prescribed shape.

That is, as an example of a weighing scale 40 according to the present invention, when the single deformable plate 20 indicated in the second embodiment above is fixedly laminated using appropriate bolts and screws via a platform spacer 31 as well as the single deformable plate 20 and bottom plate 35 are fixedly laminated together by means of an appropriate bolt and screw, with a spacer 32 therebetween.

The bottom plate 35 in this embodiment has a circuit part 37 including a control and processing circuit containing an appropriate microprocessor therein, a display section 34 for displaying the results of the processing, and a power supply holding section 33, and the plan-view shape thereof is arbitrary.

The bottom plate spacer 32 is provided to establish a gap between the bottom plate 35 and the single deformable plate 20, if the bottom plate mounting part of the bottom plate 35 is formed by a drawing press so as to provide a plurality of protrusions having a uniform height, it is possible to eliminate the spacer 32.

The flat platform 30 is connected to the load receiver 203 of the single deformable plate 20 via the platform spacer 31.

The platform spacer 31 can also be a spherical ball. Thus, the basic configuration of the weighing scale has three plates, making the scale extremely thin.

When a weighing scale 40 according to the first embodiment is to be placed on the floor, it can also have, separate from the bottom plate 35, feet 240 provided on part of the single deformable plate 20.

Specifically, for example, one or more feet 240 of the single deformable plate 20 can be provided at locations other than positions directly beneath the fixing parts 202 at which the bottom plate is fixed to the outer frame 206.

For this reason, it Is desirable that a depression 36 be formed in the bottom plate 35.

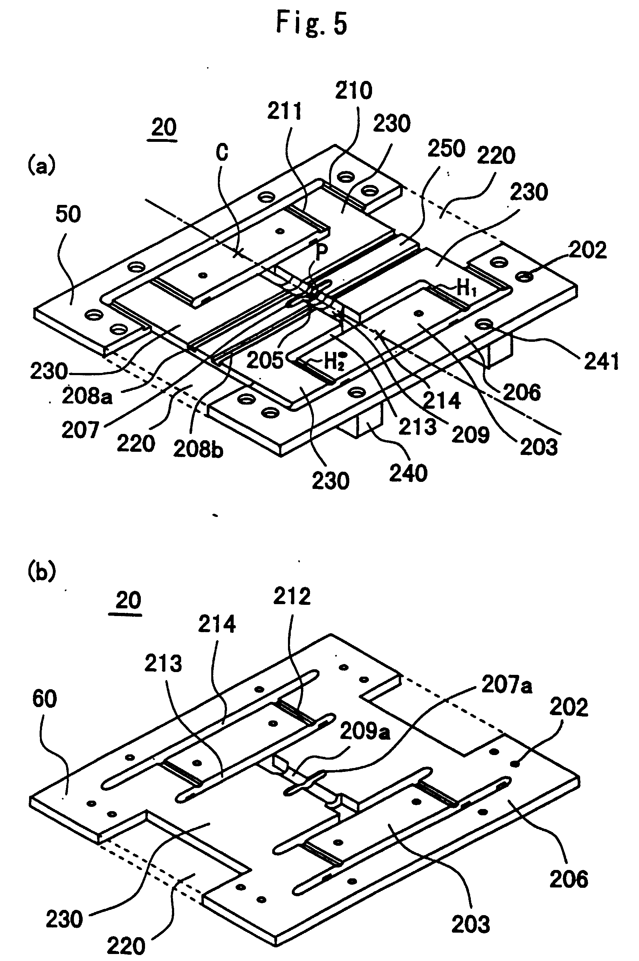

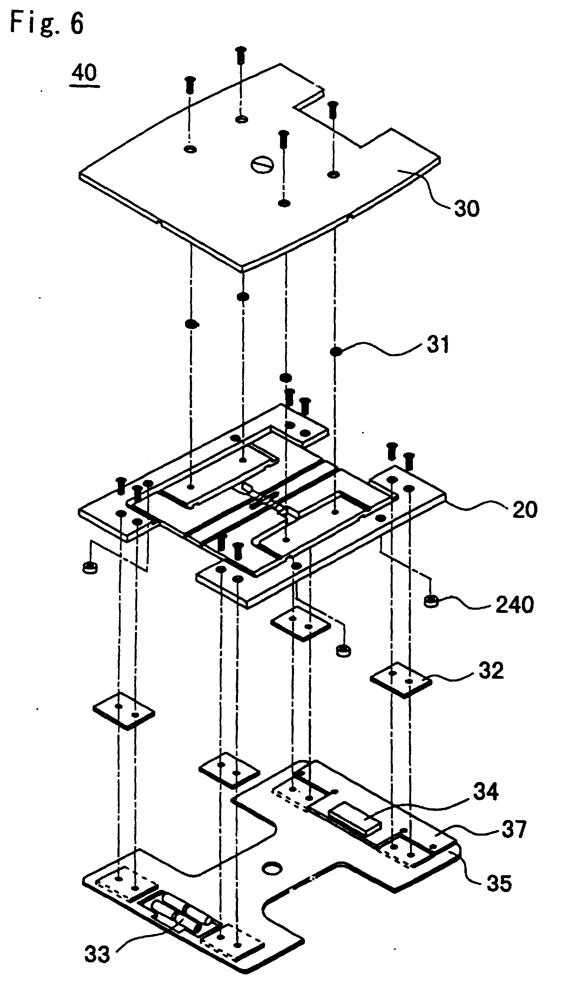

Next, another example of a single deformable plate 20 used in another example of the weighing scale 40 according to the first embodiment of the present invention, is described below, with reference made to Fig. 5 and Fig. 6.

Specifically, Fig. 5 (a) shows the shape of the surface 50 of the single deformable plate 20 in this example, this being substantially similar to the single deformable plate 20 of the second embodiment shown in Fig. 4, with the exception that two additional mutually parallel vertical grooves (third grooves) 208a and 208b are provided with a prescribed spacing therebetween so as to surround the receiving sensor 205, and be parallel to the first direction (vertical direction) that is perpendicular to the central horizontal groove (a second groove) 209.

Note that in this embodiment, on the first surface of the single deformable plate 20, at least two third grooves (vertical grooves) 208a and 208b mutually parallel to each other with a prescribed spacing therebetween so as to surround the receiving sensor 205 are provided in parallel with a first direction (vertical direction) that is perpendicular to the second direction (horizontal direction).

In this example, a slit or hollow 220 is formed in part of the outer frame 206, as shown in Fig. 4. This is not an absolute requirement, however, and it will be understood as obvious that it is also possible to form the four sides of the single deformable plate 20 by the outer frame 206, as shown in Fig. 1.

Fig. 5 (b) shows the configuration of the reverse surface 60 of the single deformable plate 20 of this example, the configuration thereof being substantially the same as that shown in Fig. 4 (b).

That is, in the third example of the first embodiment of the present invention as shown in Fig. 5, the single deformable plate 20 has a substantially rectangular shape, at least two load receivers 203 provided in symmetry with respect to the center point P of the single deformable plate 20 being formed thereon so as to extend in a longitudinal direction to a first direction (vertical direction) that is substantially perpendicular to the second direction (horizontal direction) defined above and the center side C of the load receiver 203 and an edge part making up the outer periphery of the single deformable plate 20 being separated from a main part 1 that includes the load-transmitting beam 230 of the single deformable plate 20 by a slit 214 that is provided in the single deformable plate 20 and that extends in a longitudinal direction substantially perpendicular to the first direction.

The edges H1 and H2 in the longitudinal direction of the load receiver 203 are joined to the main part 1 of the single deformable plate 20, and connected to part of a load-transmitting beam 230 extending toward the receiving sensor 205 provided at the center point P of the single deformable plate 20 via a center groove 211 forming a hinge part.

A plurality of load-transmitting beams 203 are provided in line symmetry with respect to the center P of the single deformable plate 20, one edge part of a load-transmitting beam 230 being connected to an opposing load-transmitting beam 230 that is provided with a second groove (center horizontal groove) 209 therebetween.

Another edge part of the load-transmitting beam 230 is mutually connected to another opposing load-transmitting beam 230 via a center beam 250 formed between the third grooves (vertical grooves) 208a and 208b.

In this example, the rear surface 60 of the single deformable plate 20 can either have the above-noted vertical grooves (third grooves) 208a or 208b or not have these grooves.

By proving the vertical grooves 208a and 208b, which are the third grooves in this example, the second groove, that is, the center horizontal groove 209 functions so that it does not detect the first strain formed in the second direction, that is in a direction perpendicular to the second and third grooves, each being formed along the first groove, that is the groove 207 or the third groove that is the vertical groove 208.

That is, as noted above, in this example, even if the single deformable plate that receives a load is so thin that the load-transmitting beam does not act as a rigid body, six regions divided by means of the two vertical grooves (third grooves) 208a and 208b running in the vertical direction and the one center horizontal groove (second groove) running in the horizontal direction deform along each groove can be deformed along each one of the grooves so that the two vertical grooves 208a and 208b surrounding the receiving sensor deform by receiving the horizontal strain in a concentrated manner, it is possible for the receiving sensor 205 at the center bottom part of the center horizontal groove 209, which is the first groove, to detect the strain caused by all of the loads as just only the vertical strain to deform the horizontal groove, this being separated from horizontal-direction strain.

The receiving sensor will therefore always sense only vertical-direction strain, enabling stable, highly reliable output.

Additionally, in the above-noted example of the first embodiment, while there is no particular restriction with regard to the shape and in particular the length of a vertical groove 207, which is a first groove provided at the center front surface, if a large output is desired, this can be formed with a long length, and if a small output is desired, this can be formed with a short length.

The weighing scale 40 of this example, as shown in Fig. 6, is formed by a laminated combination of an appropriate platform 30 and a single deformable plate 20, if necessary it can be assembled with a laminated bottom plate having a prescribed shape.

The specific configuration is shown in Fig. 6, this being substantially the same as the configuration shown in Fig. 2.

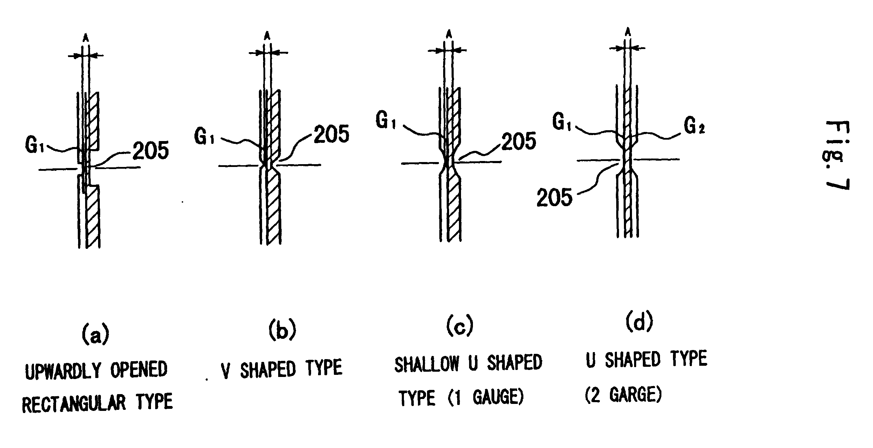

The construction of the grooves used in the single deformable plate 20 and the receiving sensor 205 of the present invention are described below, with reference made to a specific example, and referring to Fig. 7 to Fig. 10.

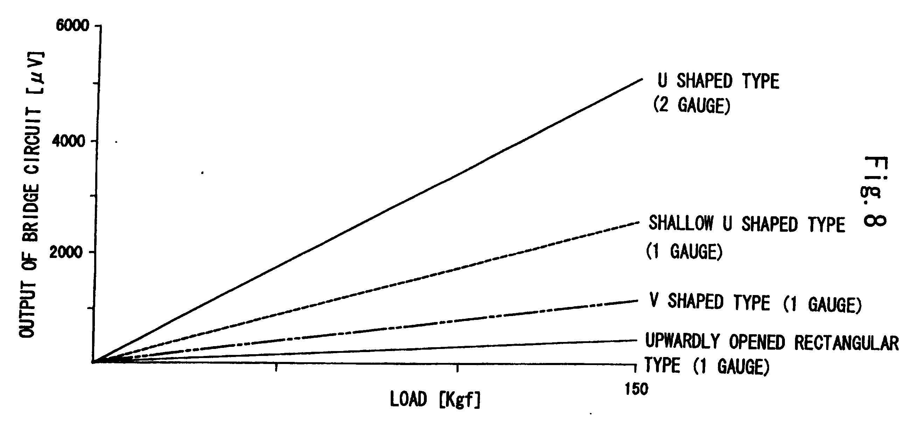

Fig. 7 and Fig. 8 are drawings that illustrate the effect relationship of the output of the receiving sensor 205 when the cross-sectional shape of the center horizontal groove 209, which is the second groove of the single deformable plate 20 used in the weighing scale of the present invention is changed.

It can be seen that the cross-sectional shape of the center horizontal groove 209 has a large influence on the output of the strain gauge G in the present invention.

In the present invention, therefore, It is desirable that the cross-sectional shape of the first groove 209, which passes through the receiving sensor 205 for the single deformable plate 20, in the longitudinal direction of the first groove, be selected as one shape from a group consisting of a V-shape, a U-shape, and a rectangular shape.

Thus, the front and reverse surface shapes were formed so that the cross-sectional shape of the center horizontal groove 209 was made an upwardly opened rectangular groove , such as shown in Fig. 7 (a), a V-shaped groove, such as shown in Fig. 7 (b), and a U-shaped groove, such as shown in Fig. 7 (c), a shallow groove having a surface for affixing a gauge G of a single gauge type being formed, with a deep groove being formed on the reverse surface.

The groove depths were made uniform, however, so that the aperture width of the grooves differ.

A U-shaped groove such as shown in Fig. 7 (d) was formed in the front and reverse surfaces 50 and 60 of the single deformable plate 20, with strain sensing means G1 and G2 being provided on the receiving sensors 205 and 205a, thereby adopting a two-gauge configuration.

In all of the cases shown in Fig. 7 (a) to Fig. 7 (d), the amount of material thickness is a prescribed thickness (A mm).

Fig. 8 shows the results of comparing the output of the strain sensing means G for each of the groove shapes.

Fig. 8 shows the output curves for each type of center horizontal groove 209.

As can be seen from Fig. 8, with the single-gauge configurations shown in Fig. 7 (a) to Fig. 7 (c), there is a prominent large output for a U-shaped groove, and although it is very small, each of the plots exhibits some curvature.

With the two-gauge configuration with a U-shaped groove shown in Fig. 7 (d), the output is approximately doubled, and there is almost no curvature, thereby indicating an output characteristic with extremely good linearity.

From the above-noted results, it can be seen that in the first embodiment, by providing center horizontal grooves 209 and 209a on the front and reverse surfaces of the single deformable plate 20, and providing a receiving sensor 205 having a strain sensing means G on each of the center horizontal grooves, It is possible for these two strain gauges G1 and G2 to function effectively.

Additionally, in the present invention, it is desirable that an internal part of a first groove 209 in which is mounted a strain gauge G in the receiving sensor 205 including the central groove 209 be flat.

Therefore, in a preferred embodiment of a single deformable plate 20 used in a weighing scale 40 according to the present invention, a second groove (horizontal groove) 209a is also provided at a position on the second surface 60 thereof opposite to the first surface 50 thereof and which is an exact position opposite to a position at which the second groove 209 is provided on the first surface 50.

That is, it is desirable that the receiving sensor 205 that has a strain sensing means G be provided on both surfaces of the single deformable plate 20.

As described above, in a preferred embodiment of a single deformable plate 20 used in the present invention, with the receiving sensor 205 of the single deformable plate 20 as a center P, if an axis in a direction parallel to a straight line that includes the center P and parallel to a line joining center points X of the a plurality of load receivers 203 is taken as a first axis, and an axis of a direction that is perpendicular to the first axis at center P is taken as the second axis, the single deformable plate 20 exhibits line symmetry with respect to the first and second axes.

As a result of adopting the above-described configuration, the single deformable plate 20 has a first groove 209 that passes through a receiving sensor 205 provided on the first front surface 50 of the single deformable plate 20, and a second groove 209a that passes through a receiving sensor 205a provided on a second front surface 60 that is different from the first front surface 50 of the single deformable plate 20.

The receiving sensors 205 and 205a provided at the first groove 209 on the first front surface 50 and at the second groove 209a on the second front surface 60, respectively, having the strain sensing means G1 and G2 affixed thereto, respectively, these strain sensing means G1 and G2, provided at the receiving sensors 205 and 205a, respectively, separately detecting a load transmitted to the single deformable plate 20 as tensile or compression strain, respectively.

According to the method of this example, it is only necessary to have two signal lines in order to form a bridge circuit on the circuit part 37.

By affixing strain gauges inside the vertical grooves 208a and 208b, which are third grooves, the groove width itself acts as a guide for the affixing of the gauges, thereby eliminating concern about skew of positioning when affixing the gauges.

Additionally, in any of the above-noted wiring methods, the four signal lines are wired within the groove, so that even if there is deformation of the single deformable plate 20 they are not caught between the single deformable plate 20 and the platform 30 or bottom plate 35, thereby enabling an extremely thin-profile design to achieve a stable output with good long-term reliability.

Additionally, even if the gauges G1 and G2 on the front and reverse surfaces are coated with a non-corrosive quick-drying adhesive such as TSE399 (Toshiba Silicone) or the like, because they are held sufficiently inside the grooves, there is an improvement in resistance to moisture and shock, and there is no influence on the thickness.

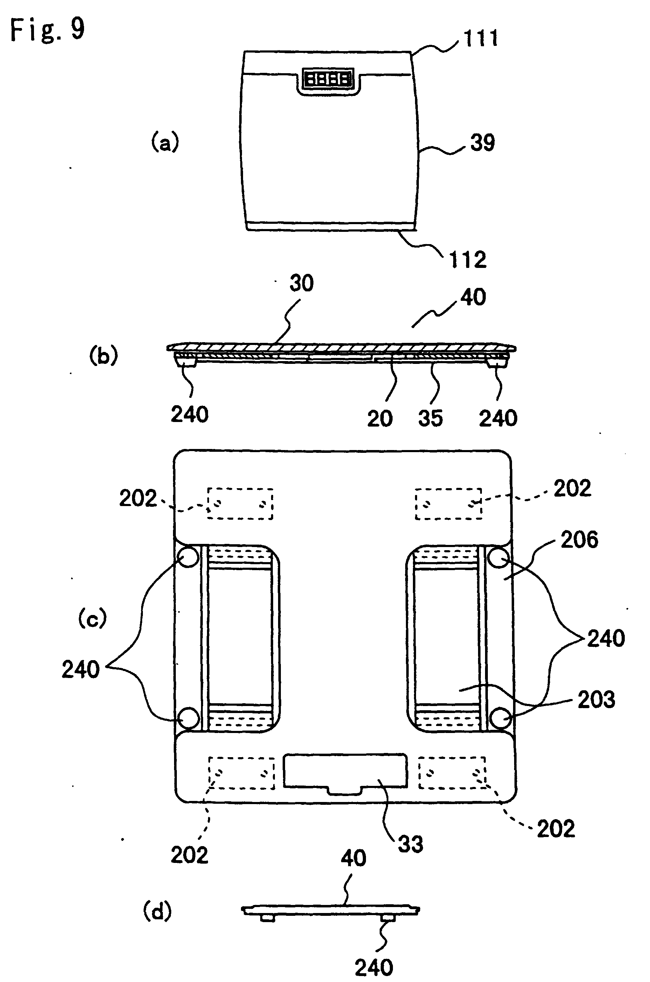

Next, an example of the case of mounting feet 240 on the rear of the outer frame 206 of a weighing scale according to the first embodiment is described below, with reference made to Fig. 9.

Specifically, Fig. 9 (a) is a top plan view of a thin-profile weighing scale 40 according to the present invention. A circuit cover 111 is used so as to cover the display section 34 and the circuit part 37, an appropriate decorative panel 39 is placed on the platform 30, so as to achieve an attractive design. A protective cover 112 is installed on the front edge, so as to protect the platform 30 and the decorative panel 39.

Fig. 9 (b) is a top plan view with the circuit cover 111, the platform 30, and the protective cover 112 removed. Fig. 9 (c) shows a single deformable plate 201 for the case in which feet have been mounted.

A plurality of feet bolt holes 240 for mounting feet 241 are provided on the two outer frames 206, these feet bolt holes 240 being provided at locations other than the four positions directly below positions on the single deformable plate 201 used to mount the bottom plate 35.

The number of feet is not restricted to four, and can be any number greater than two.

Fig. 9 (b) is a cross-section view of the overall weighing scale 40 according to the present invention, seen from a line corresponding to the center horizontal groove 209.

Fig. 9 (c) is a rear plan view showing the overall rear shape of the weighing scale 40. Feet 240 are mounted at the feet bolt holes 241 of the outer frame 206.

While there is no particular restriction with regard to the configuration of the feet 240, they can be cylindrical, conical, polygonal, or a in the shape of a polygonal cone. If the feet 240 are installed at a certain distance from the corners of the outer frame 206, when the decorative panel 39 and the platform 30 receive a load, so that there is pressure on the receiving sensor 203 of the single deformable plate 20, the load-transmitting beam 230 receives a torque, and rotates about the horizontal outer groove 210 as a pivot.

Because there is no outside stress applied from the corner of the outer frame 206 and from the floor via the feet 240 on the bottom plate fixing part 202, the rotation of the load-transmitting beam 230 is not hindered, thereby enabling a quantitatively stable output at all times.

Because the outer frame 206 has the effect of absorbing unevenness of the floor, it is possible to use the weighing scale even in a location in which it would normally rock.

In the case in which feet exist directly below the bottom plate fixing parts 202, the influence of the shape of the floor appears in the output, making it necessary to always use the weighing scale on a flat, hard surface such as a surface plate.

Fig. 9 (d) is a side view of the weighing scale 40 according to the present invention.

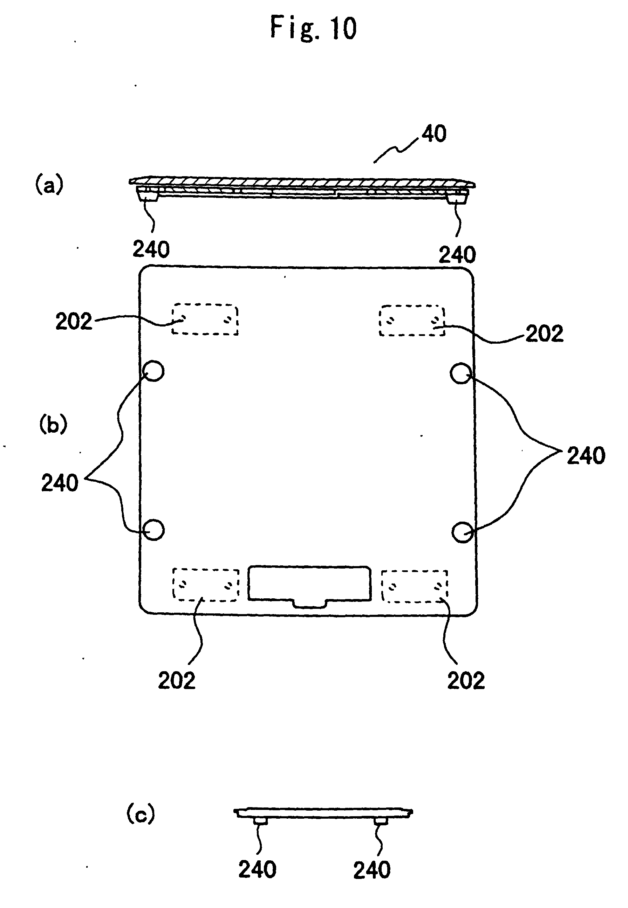

Fig. 10 illustrates an embodiment for the case in which, rather than mounting the feet 240 directly to the single deformable plate 20, the feet 240 are mounted to the reverse surface of the bottom plate 35.

Specifically, Fig. 10 (a) shows a vertical cross-section view of the overall weighing scale seen from a line that corresponds to the center horizontal groove 209. The feet 240 are mounted not on the outer frame 206, but on the bottom plate 35.

Fig. 10 (b) shows the reverse surface of the overall weighing scale 40. The plurality of feet 240 in this embodiment as well are installed at a certain distance from the corners of the bottom plate 35.

Because the bottom plate 35 is flexible and has the effect of absorbing unevenness of the floor, it is possible to use the scale even in locations in which the scale would normally rock, and even if the spacing between the outer frame 206 and the bottom plate 35 is flattened during weighing, there is no effect on the weighed value.

Fig. 10 (c) is a side view of the weighing scale 40 according to the present invention with all the outer casings in place.

The configuration of a weighing scale according to the second embodiment of the present invention is described in further detail below, with reference made to the drawings.

In a weighing scale of the first embodiment having the configuration described above, because the configuration of the single deformable plate 20 is complex, in which a load received by the load receiver 203 being transferred by means of a two-stage strain phenomenon with a plurality of load-transmitting beams 230 via slits and hinges, the load being transferred to a receiving sensor that includes a strain sensing means, the manufacturing cost is high and there are factors that affect the detection accuracy.

In the above-noted weighing scale according to the first embodiment, the platform, the bottom plate, and the deformable plate are laminated and joined together by an appropriate screw and bolt means. With this configuration, when a load is repeatedly apply to and removed from the platform, there is the possible of screws coming loose or deforming, or the platform expanding, which can cause a change in the output value from the scale, or cause it to be lowered unnecessarily.

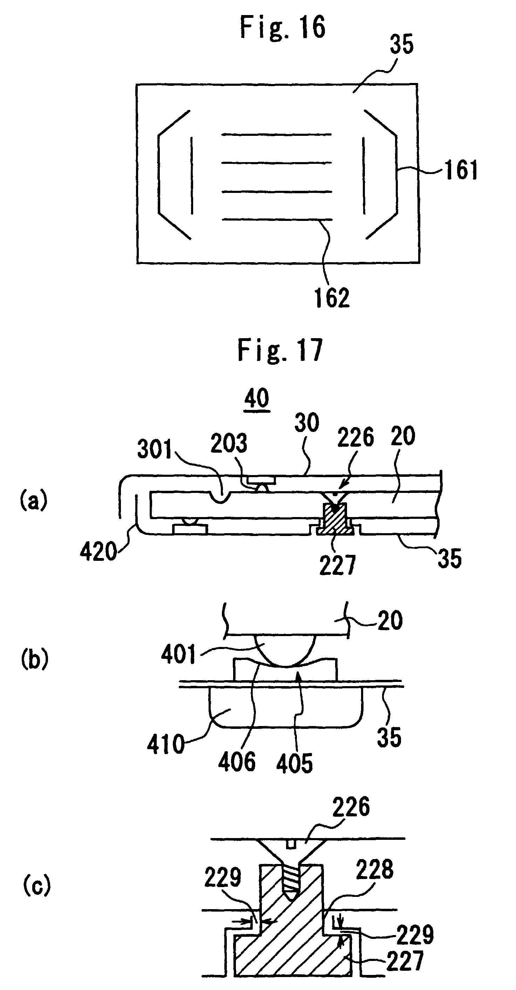

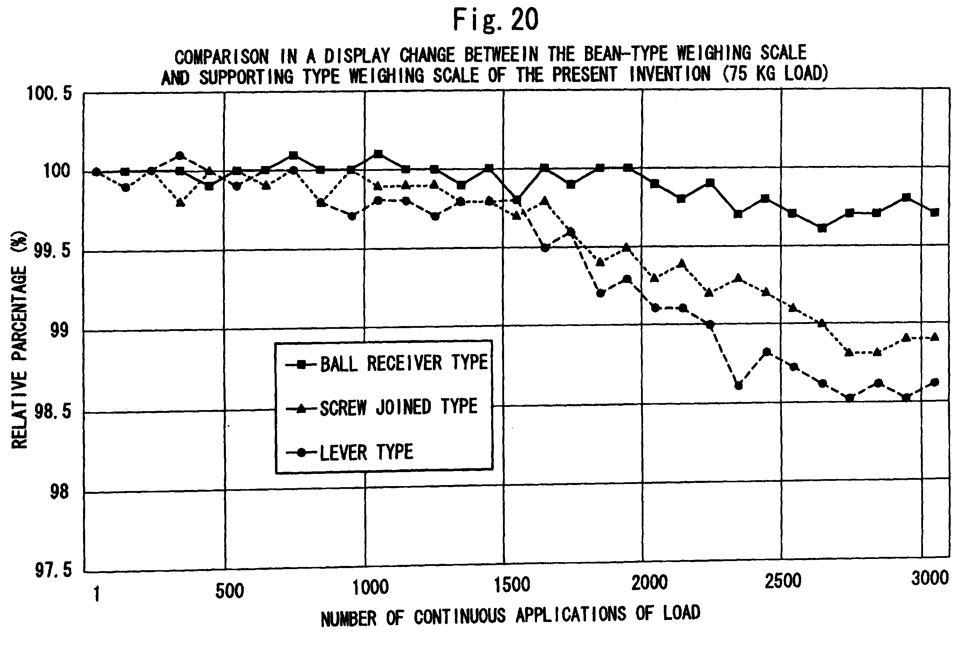

The graph of Fig. 20 shows a comparison between a beam-type scale of the past, a weighing scale having simply a bottom plate and a deformable plate joined by screws, and a weighing scale, to be described further below, as shown in Fig. 17, which does not use screws, but rather uses a bottom plate joining section made up of balls provided on the upper and lower surfaces of a single deformable plate, this providing a comparison of life testing of these types of weighing scales.

The above-noted life test was performed by dropping a weight of 75 kg at a speed of 0.06 m/s and measuring the output.

The measurement results were obtained by measuring the output every 100 drops, with the output at the first drop being taken as the 100% reference, the comparison being made in 0.1% increments.

As is clear from Fig. 20, in the beam-type weighing scale of the past, when the load is applied more than 1500 times, the output value drops greatly.

With the weighing scale according to the first embodiment, in which a single deformable plate is simply joined with screws, although the results are better than with the weighing scale of the past, there was still a large drop in the output.

In contrast to this, with a weighing scale that, rather than using screws, uses ball receivers to make contact between a top cover, a bottom plate and a deformable plate, even when the number of continuous applications of the load exceeded 3000 times, a stable output was still maintained.

A possible reason for this is that, in the beam-type scale of the past, the edge part used for connection of the beam becomes dull, thereby causing error. Additionally, fatigue of the deformable plate to which the gauge is affixed causes a decrease.

Additionally, if the relationship between the material and structure of the deformable plate and the stress is improper, the reduction in output can be further accelerated and increased in degree.

Therefore, a weighing scale according to the second embodiment of the present invention strives to provide a thin, light deformable plate having of a simplified configuration, and a weighing scale according to a third embodiment of the present invention provides an integrated weighing scale that does not use bolts or screws.

Another embodiment of the present invention will be made clear from the description that follows.

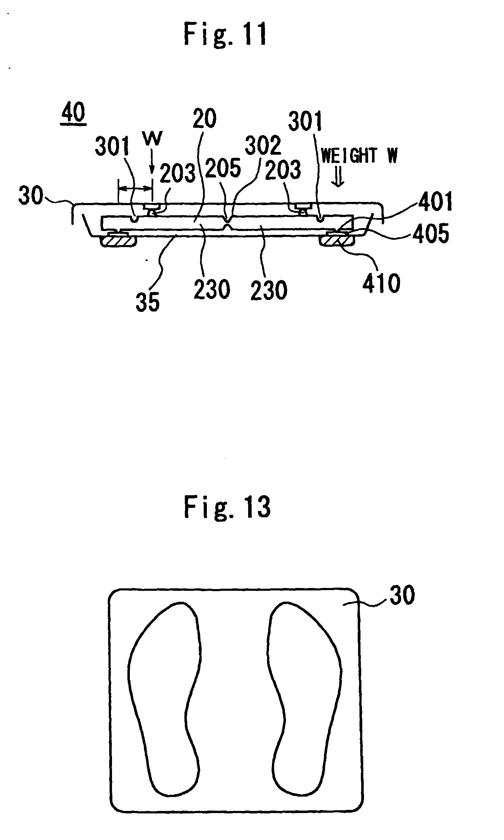

Specifically, Fig. 11 is a drawing that shows an example of a weighing scale according to the second embodiment of the present invention.

This drawing shows a weighing scale 40 that is formed by a platform 30, a bottom plate 35, and a single deformable plate 20 provided between the bottom plate 35 and the platform 30.

The single deformable plate 20 is formed by a plurality of load receivers 203 provided in proximity to the edge of the single deformable plate 20, which receive a load applied to the platform 30 in a distributed manner, a receiving sensor 205, which includes a strain sensing means 27, provided in substantially the center part of the single deformable plate 20, and a load-transmitting beam 230 that transmits a load applied to the load receivers 203 to the proximity of the receiving sensor 205.

The receiving sensor 205, in response to the load applied to the platform 30, detects the amount of displacement near the center part of the deformable plate 20 via a strain gauge.

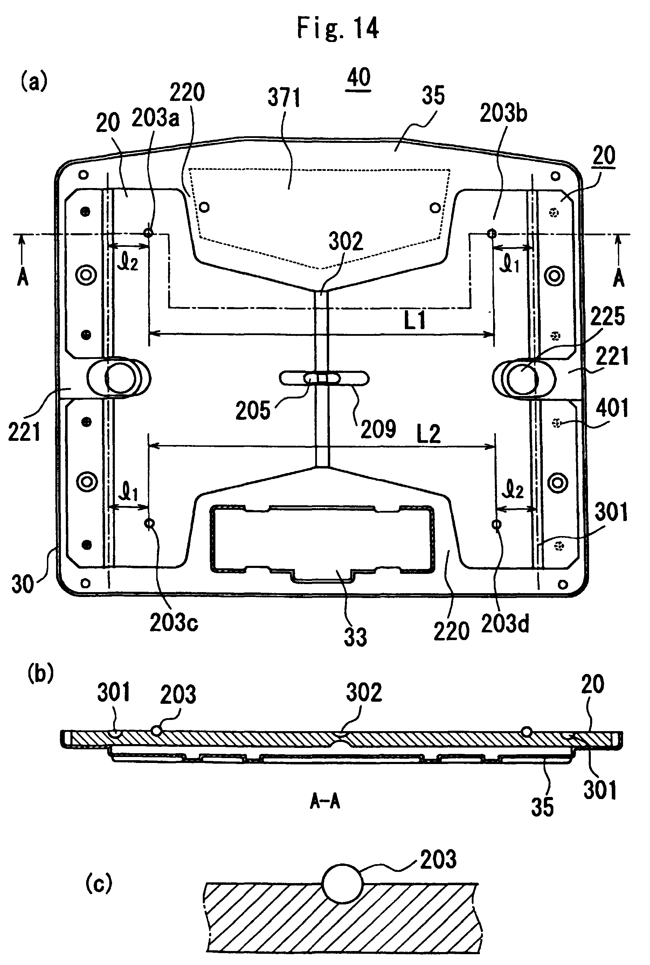

It is preferable that a first groove 302 be provided in a prescribed direction, in the vertical direction, in the deformable plate 20, so that when the load receiver 203 of the present invention receives a prescribed load, the substantially center part of the deformable plate 20 deflects so as to bend in a prescribed direction, that is a vertical direction, more specifically in the direction thereof being substantially parallel to the direction along which the feet being arranged when a person stands on the weighing scale 40, as shown in Fig. 13, this being referred to hereinafter as the first direction.

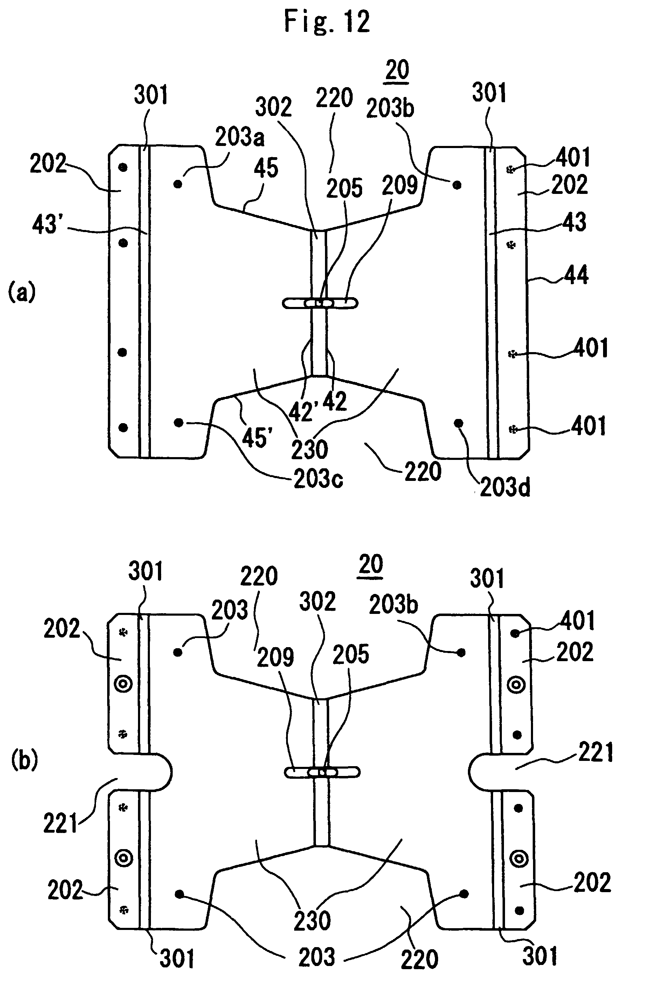

Additionally, it is desirable in a weighing scale 40 according to the second embodiment of the present invention, as shown in Fig. 12, that the end parts 42 and 42' of a pair of load-transmitting beams 230 of the deformable plate 20 joined via the first groove 302 be configured so that they move downward in response to the weight of a load.

In another example of a weighing scale according to the second embodiment of the present invention, it is desirable that the receiving sensor 205 be provided within a second groove 209 that is perpendicular to the first groove 302.

The configuration of a weighing scale 40 according to the second embodiment of the present invention is described in detail below.

Specifically, Fig. 12 (a) and Fig. 12 (b) show an example of a deformable plate in which there is no hinge between the load-transmitting beam and the load receiver.

The load receiver 203 formed integrally with the fixing part 202 to the bottom plate, via the hinge 301 on one and the same plane, and the load-transmitting beam 230 are formed continuously with each other.

Stated differently, the receiving sensor 203 can be the exist on the load-transmitting beam 230.

The integrated structure extends to the center groove 302, including the receiving sensor 205.

In the present invention, by not having a hinge intervening between the load receiver 203 and the load-transmitting beam 230, it is possible to design the scale so that the load receiver 203 and receiving sensor 205 are in close proximity, thereby enabling a further reduction in thickness and size.

Additionally, because the receiving sensor 203 and the load-transmitting beam 230 are formed integrally so as to communicate on one and the same plane, in the case in which the deformable plate is manufactured by a cutting process, the lack of a hinge makes machining faster and reduces the number of process steps.

If the deformable plate is to be manufactured of aluminum or zinc, or formed as a magnesium casting, flow characteristics are good, and there is little chance that micropores become trapped within the material, the result being a single deformable plate with stable strength, and suitability for mass production.

Fig. 12 (a) shows an example in which a hinge 301 exists at both ends of the deformable plate 20.

Fig. 12 (b) shows an example in which, a cutout depression 221 is formed at substantially the center parts of each end of the single deformable plate 20, so as to cross the hinges thereat, thereby resulting in the formation of hinges 301 at the four corners of the deformable plate 20.

These hinges 301 and the center vertical groove (first groove in the first direction) 302 that includes the receiving sensor 205 are formed in the same direction, so as to be mutually parallel.

In a weighing scale 40 according to the second embodiment of the present invention, because the direction of flexing at the hinge 301 and the direction of flexing at the center groove 302, which is the first groove, are the same, the load-transmitting beam 230 acts as a rigid body to transmit the load weight to the receiving sensor 205 without loss, and without a large amount of twisting even when an unbalanced load is applied.

Fig. 14 (a) shows an example of the case in which the single deformable plate 20 and bottom plate 35 are linked, in which the side at which the first groove (center groove) 302 makes contact, has formed in it a depression hollow 220 that has a rectangular shape, a curved shape, or a shape that is a combination thereof.

In the above-noted example of a weighing scale according to the second embodiment of the present invention, by means of the hollow 220, by including and encompassing the circuit installation part 371 and the power supply holding section 33, it is possible to place the circuit part and the power supply part on the same plane as the single deformable plate 20, thereby enabling the achievement of a thin-profile weighing scale.

Fig. 14 (b) is a cross-section view in the direction indicated as A-A in Fig. 14 (a), and Fig. 14 (c) is a drawing showing an example for the case in which the load receiver 203 is a sphere receiver.

Additionally, in another example according to the second embodiment, in Fig. 14 (a) with L1 as the distance between a pair of opposing load receivers 203a and 203b that surround the depression hollow 220, and L2 as the distance between another pair of load receivers 203c and 203d, the hollow 220 that is surrounded by the load receivers 203c and 203d has formed in it a hole the shape of a power supply for the purpose of buried mounting of a power supply 33 on the bottom plate 35.

Therefore, in the bottom plate 35 the strength between load receivers 203c and 203d is less than the strength between the load receivers 203a and 203b, and in the case in which L1=L2 , when an unbalanced load is applied the weighed amount is not constant, but varies.

That is, when a person stands on the platform 30 of the weighing scale 40 shown in Fig. 13, a rear load is applied, with a larger load being applied at the part near the heels.

For this reason, in order to achieve uniform strain detection, it is preferable that the moment between the load receivers 203a and 203b and the hinge groove 301 and the moment between the load receivers 203c and 203d and the hinge 301 be made the same.

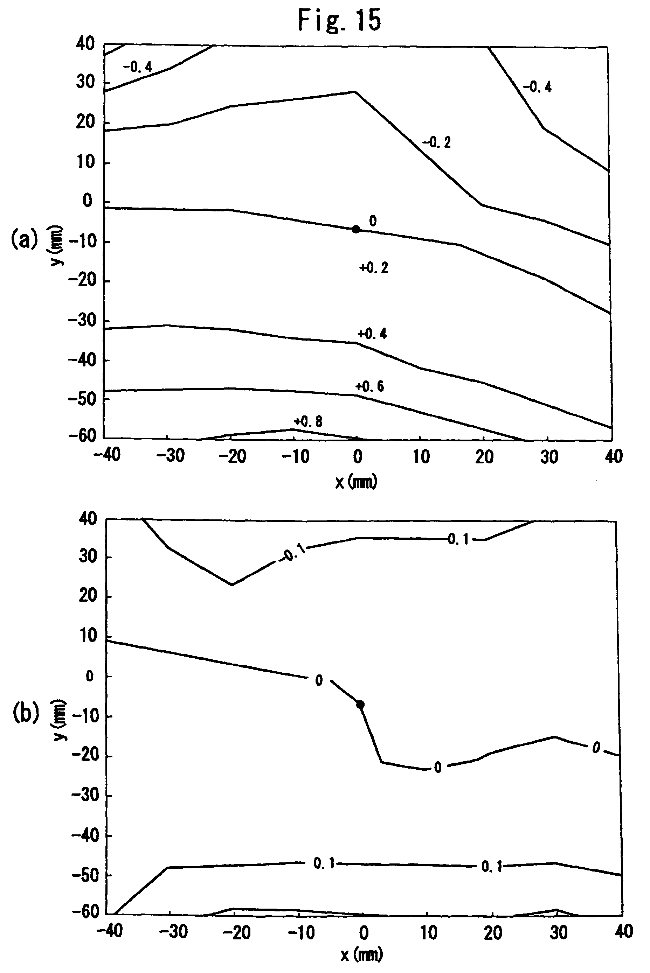

Fig. 15 is a graph that shows the results of measuring how the measured values are changed when a sample weight is moved on a surface of the platform 30 of the weighing scale 40, more specifically, when a center gravity of the sample having a weight of 75 kg, is moved within a squared range consisting of 100 mm in vertical length and 80 mm in horizontal length on the surface of the platform 30.

Note that, Fig. 15 is a graph that shows changed value in the measured data as mentioned above, in units of kilograms referenced to the weighed amount at the center of the platform 30 of the weighing scale 40, in the form of contour lines.

Fig. 15 (a) shows the results for the case in which L1=L2 and, from these results, it can be seen that when the weight approaches the power supply insertion part 33, the weighed value tends to become larger than the normal value, while if the weight moves away from the power supply insertion part 33, the output tends to be smaller than the normal value.

As is clear from Fig. 15 (a), there is a variation from the reference value (0) from a maximum of +8 kg to a minimum of -0.4 kg.

In contrast to this, Fig. 15 (b) shows the results for the case in which L1<L2, a proper distance setting being made, in which the experiment was performed under the same conditions as noted above.

From these experimental results, it can be seen that, in the above-noted example according to the second embodiment of the present invention, the variation occurring is only ±0.1 kg.

Therefore, in the second embodiment of the present invention, by setting placement distances L1 and L2 of the above-noted load receiver 203 so as to be mutually different and by establishing the distances within an appropriate range, it is possible to achieve a weighing scale that features extremely good stability with respect to unbalanced loads.

In the above, the distances considered were the distances L1 between the load receivers 203a and 203b linearly symmetric about the first groove 302, and the distance L2 between the load receivers 203c and 203d linearly symmetric about the first groove 302.

As a practical issue, because of the importance of the moment caused by the load-transmitting beam 230 with respect to the hinge 301, it is desirable that the length of a first vertical line 11 extended downward from the load receiver 203a or 203b provided on one side of the second groove 209 up until the nearby hinge groove 301, and the length of a second vertical line 12 extending from the second load receiver 203c or 203d providing in the other side of the second groove 209, be established as mutually different. In the present invention, 11>12.

That is, by way of further detailed description of a weighing scale according to the second embodiment of the present invention, referring to Fig. 12 (a), the deformable plate 20 basically has formed in it a single groove 302 in the vertical direction (first direction), and it is desirable that other elements of the configuration exhibit substantially left-right linear symmetry with respect to the groove 302.

The groove 302 in this example preferable is configured so as to include a receiving sensor 205 in part thereof.

More specifically, as shown in Fig. 14, it is preferable that the receiving sensor 205 be disposed within the second groove 209 that is perpendicular to the groove 302.

In this example of the present invention, it is desirable that the end parts 42 and 42' of a pair of load-transmitting beams 230 of the deformable plate 20 joined via the first groove 302.

In the above-noted example of the present invention, it is preferable that a hinge groove 301 formed in parallel with the first groove 302 at a pair of positions in proximity to the edge parts 42, 42' and neighboring the receiving sensor 203 of the deformable plate 20 is formed in connection with load transmitting beam 230 of the deformable plate 20.

That is, in a deformable plate of the second embodiment of the present invention, in contrast to the first embodiment, there is no slit part and even if there is a part such as a groove at which the thickness is reduced, the load-transmitting beams 230 are basically formed integrally and, in particular, the configuration between the load-transmitting beam 230 and the load receiver 203 are integral and on the same plane, without an intervening hinge groove or the like.

In another example of the second embodiment of the present invention, as shown in Fig. 12 (b), at substantially the center of an edge part 44 neighboring to the load receiver 203 of the deformable plate 20 is provided a first hollow 221 formed by crossing the hinge 301 which is in parallel to the first groove 302.

By adopting the above-noted configuration, the detection sensitivity of the deformable plate 20 is improved, and it is possible to lighten the weighing scale. In addition, it is possible to provide a position at which a spring can be used to join the platform 30 and the bottom plate 35.

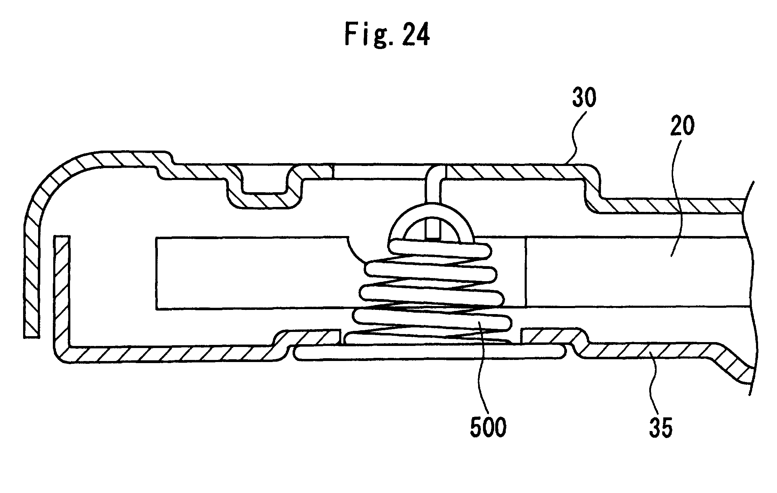

In the above-noted example of the present invention, an example in which the platform 30 and the bottom plate 35 of the weighing scale 40 are joined by a spring 500 or the like is shown in Fig. 24.

The function of the cutout hollow 221 provided in the deformable plate 20 of the above-noted example is as follows.

Specifically, as shown in Fig. 12 (b), by providing the cutout hollow 221, it is possible to achieve further enhancement of the effect of the hinge groove 301 described later.

That is, by providing cutout hollows 221 on the left and right, the hinge grooves are split, so that the load-transmitting beam 230 is divided into four parts, which are independently driven, the result being an improvement in the independence of the strain of each of the load receivers 203.

In a weighing scale according to the second embodiment of the present invention, it is preferable that the deformable plate 20 have second cutout hollows 220 provided in another pair of edge parts 45 and 45' in contact with the first groove 302.

In the above-noted configuration, there is an improvement in the strain detection sensitivity of the deformable plate 20, and it is possible to lighten the weighing scale. Additionally, this configuration enables the placement of an appropriate display section and power supply.

In another example according to the second embodiment of the present invention, as shown in Fig. 12, at least two load receivers 203b and 203d are provided on the first front surface of the platform 30 of the deformable plate 20, at prescribed positions located in a direction toward the first groove 302 with respect to the position at which the hinge groove 301 is provided and along the hinge groove 301, while at least two load receivers 203a and 203c are provided at positions in linear symmetry with respect to the first groove 302, these being formed along the hinge 301.

Additionally, in this example, bottom plate joining parts 401, the number of which is at least greater than the number of load receivers 203 are provided on the second front surface of the deformable plate 20 opposite the bottom plate 35, at prescribed positions between the position at which the hinge groove 301 is formed and the edge part 44, which is formed in parallel to the hinge groove 301.

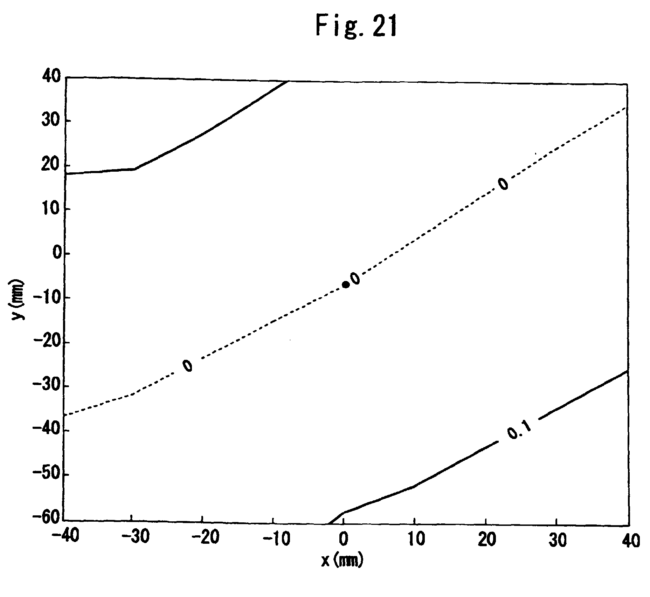

The function of the hinge groove in this example is described below, with reference being made to Fig. 21 to Fig. 23.

Specifically, Fig. 21 is a comparison made using the deformable plate 20 as shown in Fig. 12(b), provided with the above-noted cutout hollow 221, for the cases in which the hinge groove 301 is and is not provided, by performing the above-described unbalanced load experiment.

That is, Fig. 21 shows the results of using a deformable plate having four top cover balls and four bottom plate balls, and no hinge groove 301, wherein the four bottom plate balls are aligned in the same plane and, as described above, applying a 75 kg load to the top cover that forms the platform 30 of the weighing scale 40, using the center of the weighing scale 40 as the origin, moving the weight over a 100-mm vertical range and a 80-mm horizontal range, and measuring the error in output with respect to the origin, in kg units

As is clear from Fig. 21, although an error of approximately 0.1 kg does occur, a substantially stable output is achieved.

Even in the case in which the above-noted experiment was performed with respect to the example deformable plate 20 shown in Fig. 12 (b) provided with a hinge groove 301, results almost the same as Fig. 21 were obtained.

Another unbalanced load experiment was performed using a weighing scale 40 that uses a single deformable plate without a hinge groove, and placing a sheet having a thickness of 1 mm under the front left foot, for example, of the feet provided on the reverse surface of the weighing scale 40, so as to cause the scale to rock.

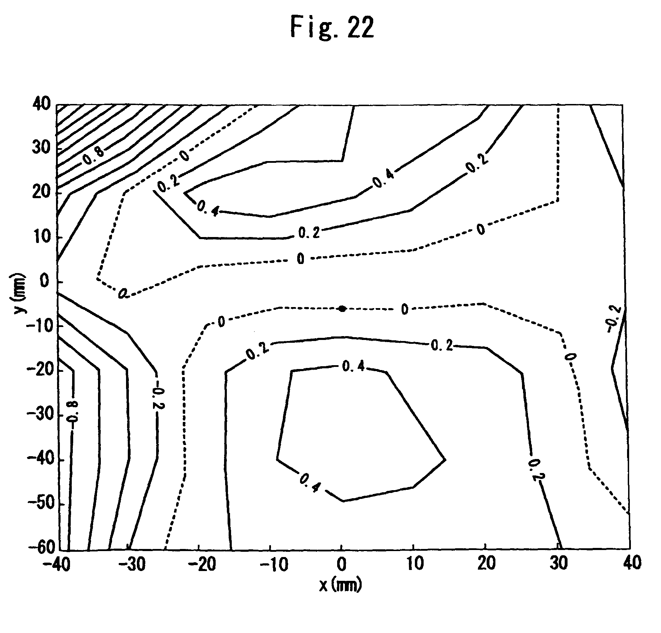

The results of that unbalanced load experiment are shown in Fig. 22.

As can be seen from Fig. 22, in the case in which the weight is offset to the front left, if the weight exceeds 1 kg, a large variation is observed, this being caused by strain that reaches the deformable plate so as to cause an error.

The same type of unbalanced load experiment was performed using a weighing scale 40 with a single deformable plate having a hinge groove, placing a sheet having a thickness of 1 mm under the front left foot, for example, of the feet provided on the reverse surface of the weighing scale 40, so as to cause the scale to rock.

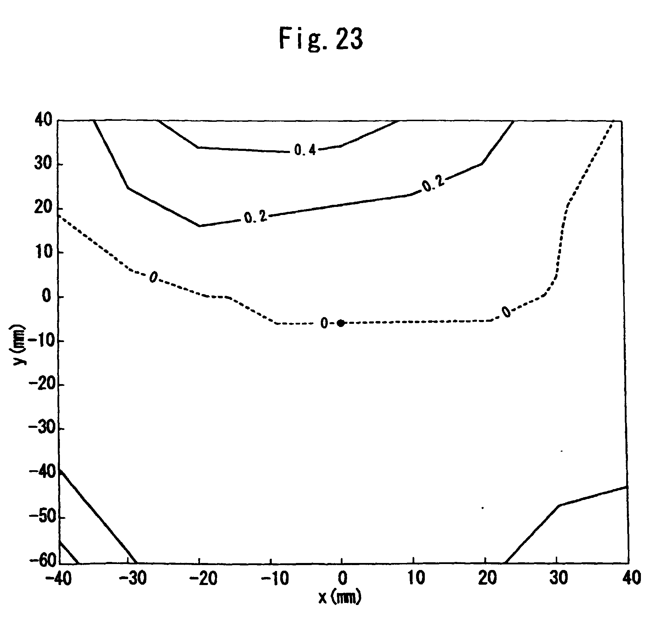

The results of that unbalanced load experiment are shown in Fig. 23.

As can be seen from Fig. 23, it is possible to limit the error in output value to a maximum of approximately 0.4 kg, this fact indicating that even if the weighing scale is used in a condition in which it rock greatly, this variation is considerable absorbed by the hinge groove 301, so that strain is not transmitted to the receiving sensor 205 at the center part, thereby enabling an accurate and stable output in response to an unbalanced load.

The fact that the load receivers 203 and bottom plate joining parts 401 are all provided at positions exhibiting linear symmetry with respect to the first groove 302 is as described above.

The length of a first vertical line 11 extended downward from the load receiver 203a or 203b provided on one side of a region delineated by the second groove (horizontal direction groove 209) and an extension thereof up until the nearby hinge groove 301, and the length of a second vertical line 12 extending from the second load receiver 203c or 203d providing in the other side of the second groove 209, can be made equal, and can alternately be made mutually different.

It is desirable that the load receivers 203 and the bottom plate joining parts 401 in the above-noted example include a member in point contact, this preferably being, for example, a sphere, a cone, or a polygonal cone.

Specifically, it is preferable that the load receivers and bottom plate joining parts be formed by top cover balls or bottom plate balls.

A third embodiment of a weighing scale 40 according to the present invention is described below, with references made to the drawings.

Specifically, in a weighing scale 40 according to the third embodiment of the present invention, the platform 30 is joined to the deformable plate 20 via a load receiver 203, and the deformable plate 20 is joined to the bottom plate 35 via a bottom plate joining part 401.

In particular in an example of the third embodiment, the deformable plate 20 and the bottom plate 35 are formed integrally.

More specifically, a weighing scale 40 according to the third embodiment of the present invention is formed by a platform 30, a bottom plate 35, and a single deformable plate 20 provided between the platform 30 and the bottom plate 35.

The deformable plate 20 is formed by a plurality of load receivers 203 provided in proximity to the edge of the single deformable plate 20, which receive a load applied to the platform in a distributed manner, a receiving sensor 205, which includes a strain sensing means 27, provided in substantially the center part of the single deformable plate 20, and a load-transmitting beam 230 that transmits a load applied to the load receivers 203 to the proximity of the receiving sensor 205.

The receiving sensor 205, in response to the load applied to the platform 30, detects the amount of displacement near the center part of the deformable plate 20 via a strain gauge.

Additionally, this weighing scale is a thin-profile weighing scale in which the deformable plate 20 and bottom plate 35 are integrally formed.

That is, in the third embodiment of the weighing scale 40, in order to achieve not only thinness but sufficient reinforcement, the deformable plate 20 and bottom plate 35 are integrally formed via a prescribed clearance, and it is desirable that the bottom plate 35, as shown in Fig. 16, have formed in it reinforcing grooves 161 and 162 for the purpose of providing additional strength.

More specifically, it is desirable that a reinforcing groove 162 perpendicular to the first groove 302 be formed on the bottom plate 35 and at least near the substantially center part of the deformable plate 20, and desirable that a reinforcing groove 161 parallel to the first groove 302 be formed on the bottom plate 35 and at least near the load receivers 203 or near the bottom plate joining parts 401.

It is desirable that the platform 30 of this example of the present invention be joined via a joining means or a spring means 225 via a first hollow 220 provided on the deformable plate 20.

As a method of joining the deformable plate 20 and the bottom plate 35, a screw 226 and an anchor bar 227, for example as shown in Fig. 17, can be used to maintain a prescribed clearance 229 at the peripheral part of a hole 228 provided in substantially the center part of the bottom plate 35 so as to form a stopper arrangement.

In the weighing scale 40 according to this example, it is desirable that the feet 410 of the bottom plate 35 be provided directly beneath the bottom plate joining part 401.

Additionally, it is preferable that the setting position of the bottom plate joining parts 401 be such that when a prescribed load is applied to the platform 30, the weight center is further to the outside than the load center.

In the weighing scale 40 according to the present invention, it is preferable, as shown in Fig. 17 (b), that the bottom plate joining parts 401 are formed by bottom plate balls fixed to the deformable plate 20 and opposing receiving members 405 each having a curved surface 406 for receiving a bottom plate ball provided on the surface of the bottom plate 20 in the surface of the deformable plate 20.

In the weighing scale 40 of this example, it is preferable that the positions of all of the plurality of load receivers 405 be at an equal distance from the center line of the first groove 302.

In the same manner, it is preferable that the positions of the plurality of bottom plate joining parts 401 all be at an equal distance from the center line of the first groove 302.

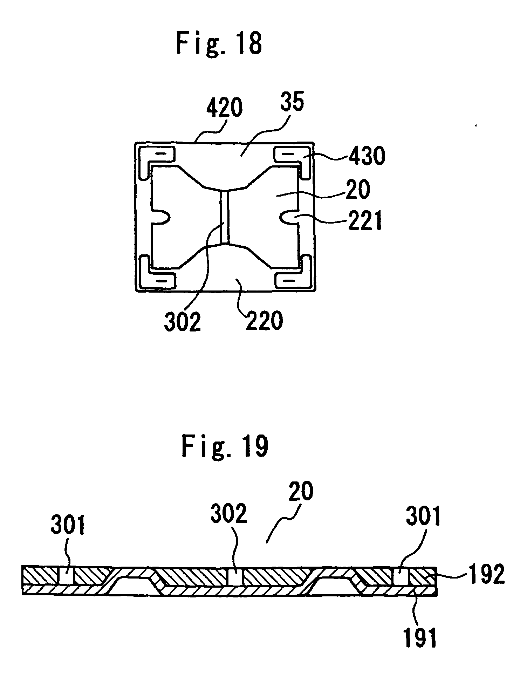

In another example of a weighing scale 40 according to the present invention, it is preferable that when joining the deformable plate 20 and the bottom plate 35, the bottom plate 35 be formed as an upwardly open box shape, as shown in Fig. 18, the deformable plate 20 fits into the box shape, and that between the corner part of the deformable plate 20 and the peripheral walls 420 of the bottom plate 35 a mounting member 430 is placed so as to prevent vibration and displacement of the deformable plate 20.

In contrast to an above-described example, in which the deformable plate 20 is integrally formed of a metal plate, in another example as shown in Fig. 19, it is possible to use a compound structure, in which two metal plates are joined together as one.

In the above-noted configuration, it is possible to make the thickness of the deformable plate 20 thinner than in previously described examples, and further be possible to achieve a deformable plate with great strength.

As shown in Fig. 19, the configuration of the deformable plate in the above-noted example is one in which a plurality of protrusions 193 are provided on the front surface of a first steel plate 191, and apertures 194 which can mate with the protrusions 193 of the steel plate 191 are formed in a second steel plate 192, the steel plates 191 and 192 being joined together under pressure.

As described above, it is possible to achieve an extremely thin weighing scale 40 using a single deformable plate 20 as described in the examples and adopting a three-stage configuration, thereby eliminating load transmission seen with the knife-edge used in a beam-type scale.

The result is that accuracy does not decrease over a short period of time, and it is possible to perform weighing with high reliability for a long period of time.

Because of the extreme thinness of the present invention, the scale does not present an obstacle that can be tripped over when placed on the floor.

If a mat is placed over the scale so that the display can be viewed, it is even possible to place the scale in an entrance to a house. If the scale is place in the bath, it is possible to use it for weighing and also in place of a normal bath mat.

More specifically, by making the shape of the groove of the receiving sensor 205 in the deformable plate 20 of the present invention U-shaped in particular, it is possible to achieve a strain gauge output that is larger than obtained with other shapes.

By affixing strain gauges G1 and G2 to both surfaces of the single deformable plate 20, it is possible to achieve double the output and better linearity than with affixing to just one side.

Because the weighing scale 40 of the present invention is thin, it provides repeatably accurate weighing anywhere, for example on a floor barely able to accommodate the bottom plate, and even on a floor with unevenness.

According to the deformable plate 20 used in the weighing scale 40 of the present invention, it is possible to dispose a power supply 33 that operates the deformable plate 20 that implements an extremely thin weighing scale, a circuit-related member 37, and a load-display section 34 on the same plane as the deformable plate 20, thereby enabling a thin profile with a small surface area as well.

According to the present invention, by connecting the platform 30 and the deformable plate 20 with an intervening spacer therebetween, even if the platform flexes downward under a load, it does not come into contact with the deformable plate 20.

If it did come into contact, there would be an adverse influence on the displacement of the receiving sensor 205 from the load transmitted from the load receiver. With the present invention, however, it is possible to avoid this problem.

In the present invention, a plurality of feet 240 supporting the overall weighing scale are installed on the reverse surface of the bottom plate 35 or the corresponding positions on the reverse surface of the outer frame 206 at positions directly beneath fixing parts 202 between the deformable plate 20 and the bottom plate 35.

Because of this arrangement even if because of transmitted load from the platform the fixing parts between the deformable plate 20 and the bottom plate 35 deform in the same manner, because the position of the feet in contact with the floor is on the outer frame 206, it is possible for the fixing parts to deform freely without hindrance, making it possible to accurately measure a load, without regard to unevenness of the floor surface.

With the weighing scale 40 according to the present invention, it is possible to achieve not only a thin profile, but also lightness, thereby reducing the materials cost, in addition to the effect of being able to reduce the manufacturing cost even further by improving the yield of die-casting a single deformable plate.

Additionally, in the present invention, by establishing a distance design so that the moments with respect to the hinge caused by the two groups of load receivers 203 formed so as to surround the above-noted box-shaped hollow, in the case of a weighing scale in which the deformable plate and the bottom plate are integrally formed, it is possible to achieve overall balance of strength, and to achieve reliable and extremely stable weighed values in the case of an unbalanced load.

**Claims**

1. A weighing scale comprising a platform, a bottom plate, and a single deformable plate provided between said platform and said bottom plate, said deformable plate being provided with a plurality of load receivers being arranged in a vicinity of an end of said deformable plate and which receive in a distributed manner a load applied to said platform, a receiving sensor that includes a strain sensing means provided in substantially said center part of said deformable plate, and a load-transmitting beam that transmits a load applied to said load receiver to said proximity of said receiving sensor, wherein said receiving sensor, in response to a load applied to said platform, detects an amount of displacement near said center part of said deformable plate, via a strain gauge.

2. A weighing scale according to claim 1, wherein said deformable plate is provided with a first groove in a prescribed direction, so that when a prescribed load is applied to said load receiver, a substantially center part of said deformable plate bends in a predetermined direction.

3. A weighing scale according to claim 2, wherein mutually joined end parts of a pair of load-transmitting beams making up said deformable plate are configured so as to be displaced downward in response to an amount of load.

4. A weighing scale according to claim 2, wherein said receiving sensor is provided inside a second groove perpendicular to said first groove.

5. A weighing scale according to any one of claim 1 to claim 4, wherein said deformable plate is configured in left-to-right symmetry with respect to said first groove.

6. A weighing scale according to any one of claim 3 to claim 5, wherein said lead transmitting beam is so configured in that an end parts of said load-transmitting beams of said deformable plate are caused to be joined via said first groove.

**7.** A weighing scale according to any of claim 1 to claim 6, wherein a hinge groove is formed in parallel with said first groove in a region near a pair of end parts of said load receivers of said deformable plate.

**8.** A weighing scale according to any of claim 1 to claim 7, wherein said load-transmitting beams are formed integrally between said load-transmitting beam and said load receiver, without a hinge groove.

**9.** A weighing scale according to any of claim 1 to claim 8, wherein at substantially said center part of an end part neighboring said load receiver of said deformable plates, first depression hollow part is formed so as to cross over said hinge groove that is formed in parallel to said first groove.

**10.** A weighing scale according to any of claim 1 to claim 9, wherein said deformable plate is provided with a second depression hollow at another pair of end parts contacting said first groove.

**11.** A weighing scale according to any of claim 1 to claim 10, wherein, on a first front surface of said deformable plate that opposed said platform, is formed a least two load receivers at prescribed positions on said first groove side with respect to said position at which said hinge groove is formed, and further wherein, on a second front surface of said deformable plate that opposed said bottom plate, is formed a plurality of bottom plate joining parts, said number of which is minimally greater than said number of said load receivers, at prescribed positions between a position at which said hinge groove is formed and said end part formed parallel to said hinge groove.

**12.** A weighing scale according to claim 11, wherein all said load receivers and said bottom plate joining parts are provided at positions which are line symmetrical with respect to said first groove.

**13.** A weighing scale according to claim 12, wherein a first vertical line length dropped from a first said load receiver provided on one side of said second groove to a nearby hinge and a second vertical line length dropped from a second said load receiver provided on said other side of said second groove to said nearby hinge groove are mutually different.

**14.** A weighing scale according to any of claim 1 to claim 13, wherein said load receivers and bottom plate joining parts include a member in point contact.

**15.** A weighing scale according to claim 14, wherein said load receivers include a top cover ball.

**16.** A weighing scale according to claim 14, wherein said bottom plate joining parts include a bottom plate ball.

**17.** A weighing scale according to any of claim 1 to claim 16, wherein said platform is connected to said deformable plate via said load receivers and wherein said deformable plate is joined to said bottom plate via said bottom plate joining parts.

**18.** A weighing scale comprising a platform, a bottom plate, and a single deformable plate provided between said platform and said bottom plate, said deformable plate being provided with a plurality of load receivers being arranged in a vicinity of an end of said deformable plate and which receive in a distributed manner a load applied to said platform, a receiving sensor that includes a strain sensing means provided in substantially said center part of said deformable plate, and a load-transmitting beam that transmits a load applied to said load receiver to said proximity of said receiving sensor, wherein said receiving sensor, in response to a load applied to said platform, detects an amount of displacement near said center part of said deformable plate, via a strain gauge, and further wherein said deformable plate and said bottom plate are integrally formed.

**19.** A weighing scale according to claim 18, wherein said bottom plate has formed in it a groove for reinforcing its strength.

**20.** A weighing scale according to claim 19, wherein said reinforcing groove is formed at least in proximity to a substantially center position of said bottom plate, in a direction perpendicular to said first groove.

**21.** A weighing scale according to claim 19, wherein said reinforcing groove is formed at least in proximity to said load receiver or said bottom plate joining parts of said bottom plate, in a direction parallel to said first groove.

**22.** A weighing scale according to any of claim 1 to claim 21, wherein said platform is joined via an appropriate joining means via a first hollow formed in said deformable plate.

**23.** A weighing scale according to any of claim 1 to claim 22, wherein feet are provided for said bottom plate directly beneath said bottom plate joining parts.

**24.** A weighing scale according to claim 23, wherein said positions of said bottom plate joining parts are established so that, when a prescribed load is applied to said platform, said bottom plate joining parts are farther to said outside than said center of load.

25. A weighing scale according to claim 23, wherein said bottom plate joining parts have a bottom plate ball fixed to said deformable plate, and a receiving member having a curved surface for receiving said bottom plate ball provided on a surface of said bottom plate opposite said deformable plate.

26. A weighing scale according to any of claim 18 to claim 25, wherein said placement position of said plurality of load receivers is such that they are all at equal distance from said center line of said first groove.

27. A weighing scale according to any of claim 18 to claim 25, wherein said placement position of said plurality of bottom plate joining parts is such that they are all at equal distance from said center line of said first groove.

28. A weighing scale according to any of claim 1 to claim 27, wherein said deformable plate and said bottom plate are joined by a screw, so as to form a clearance therebetween.

29. A weighing scale comprising a deformable plate that measures a weight, wherein a weight applied to a platform is distributed and applied to a plurality of weight points provided on a plurality of load receivers, said load being supported by a plurality of pivot points, and a plurality of load-transmitting beams being used to centralize said load and cause a sensor to operate, said strain or deformation in said sensor being sensed as a change in an electrical quantity, this weighing scale having a single deformable plate, which is integrally formed together with at least a receiving sensor that includes a strain sensing means, a load-transmitting beam that communicates with said receiving sensor, and a load receiver, and further wherein said single deformable plate has minimally on a first surface thereof a second groove (horizontal groove) that includes said receiving sensor and is formed in a direction (second direction) that is parallel to a straight line which joins said center points of said plurality of load receivers.

30. A weighing scale according to claim 29, wherein on said first front surface of said deformable plate is formed at least one first groove (vertical groove) that includes said receiving sensor and is parallel to a first direction perpendicular to said second direction.

31. A weighing scale according to either claim 29 or claim 30, wherein on said first front surface of said deformable plate, are minimally formed two mutually parallel third grooves (third vertical grooves) so as to surround said receiving sensor, in a first direction perpendicular to said second direction.

32. A weighing scale according to any of claim 29 to claim 31, wherein said second groove functions so as to detect along said second groove, a first strain in a direction (first direction) perpendicular to said second groove.

33. A weighing scale according to any of claim 29 to claim 32, wherein said second groove function so that it does detect along said first or third groove (vertical groove), a second strain in a direction (first direction) perpendicular to said first or said third groove.

34. A weighing scale according to any of claim 29 to claim 33, wherein said second groove passing through said receiving sensor in said deformable plate has a cross-sectional shape in said longitudinal direction thereof that is one shape selected from a group consisting of an upwardly open V-shape, U-shape, or rectangular shape.

35. A weighing scale according to claim 6 wherein a position within said second groove at which is mounted a strain sensing means in said receiving sensor that includes said second groove is formed so as to be flat.

36. A weighing scale according to any of claim 29 to claim 35, wherein said second groove (horizontal groove) is provided also on a second front surface that is on said opposite side from said first front surface of said single deformable plate and in a position that is opposite said placement position of second groove provided on said first front surface of said deformable plate.

37. A weighing scale according to claim 36, wherein said receiving sensor is provided on both surfaces of said single deformable plate.

38. A weighing scale according to any of claim 29 to claim 37, wherein with said receiving sensor of said single deformable plate as a center, if an axis in a direction that is parallel to a straight line that connects said center points of said plurality of load receivers, passing through this center and including said receiving sensor is a first axis, and an axis in a direction that is perpendicular to said first axis at said center is a second axis, said single deformable plate has a shape that has line symmetry with respect to said first and second axes.

**39.** A weighing scale according to claim 29 comprising a first groove passing through said receiving sensor provided on a first front surface of said single deformable plate and a second groove passing through said receiving sensor provided on a second front surface of said single deformable plate different from said first front surface thereof, a strain sensing means being affixed to said receiving sensor of said first groove provided on a first front surface of said single deformable plate and on said receiving sensor of said second groove provided on a second front surface of said single deformable plate, wherein a load transmitted to said single deformable plate is detected separately as either a tensile strain or a compression strain by each of said strain sensing means provided on said receiving sensors.

**40.** A weighing scale according to claims 29 to 39, wherein said foot for supporting said single deformable plate, is installed on one surface of an outer frame provided on said outside of an most outer slit part of said single deformable plate.

**41.** A weighing scale according to claim 40, wherein one or more said feet are installed at a place except for said fixing parts of said bottom plate provided on said frame.

**42.** A weighing scale according to any of claim 29 to claim 41, wherein said single deformable plate has a substantially rectangular shape, at least two load receivers provided with symmetrical with respect to said center of said single deformable plate, formed so as to extend in a longitudinal direction in a direction that is substantially perpendicular to said second direction, wherein a center side of said load receiver and an edge part that forms said outer periphery side of said single deformable plate, are separated from said main part that includes said load transmitting beam of said single deformable plate by a slit part provided on said single deformable plate and extending in a longitudinal direction that is substantially perpendicular to said second direction, and further wherein an edge part of said longitudinal direction side of said load receiver is joined to said main part of said single deformable plate, and said edge part of said longitudinal direction side of said load receiver part is connected to a part of said load-transmitting beams which is extended up to said receiving sensor provided at a center of said single, via a hinge part, said plurality of load-transmitting beams being provided in symmetry with respect to said center of said single deformable plate, and one end part of said load-transmitting beams being mutually connected, via said second groove.

**43.** A weighing scale according to claim 3, wherein said single deformable plate has a substantially rectangular shape, at least two load receivers provided with symmetrical with respect to said center of said single deformable plate, formed so as to extend in a longitudinal direction that is substantially perpendicular to said second direction, wherein a center side portion of said load receiving portion and an edge part that forms said outer periphery side of said single deformable plate, is separated from said main part that includes said load transmitting beam of said single deformable plate by a slit part provided on said single deformable plate and extending in a longitudinal direction that is substantially perpendicular to said second direction, and further wherein an edge part of said longitudinal direction side of said load receiver is joined to said main part of said single deformable plate, and an edge part of said longitudinal direction side of said load receiver is also joined via a hinge part, to a part of load-transmitting beams extended up to said load receiving sensor provided at a center portion of said single deformable plate, said plurality of load-transmitting beams being provided in symmetry with respect to said center of said single deformable plate, one end part of said load-transmitting beams being mutually connected to an end of an opposing load-transmitting beam, via said second groove, another end of said load-transmitting beams being mutually connected to another load-transmitting beam provided in opposition, via a center beam part formed between said third grooves.

**44.** A weighing scale according to any of claim 29 to claim 43, wherein among said outer frames that form said respective outer peripheral parts of said single deformable plate, a hollow portion is provided in part of an outer frame formed in parallel with said second groove.

**45.** A weighing scale according to any of claim 29 to claim 44, wherein a foot that supports said single deformable plate is installed in a position on said bottom plate other than a position corresponding to directly beneath a fixing part for fixing said bottom plate to said single deformable plate.

**46.** A weighing scale according to any of claim 1 to 45, wherein said single deformable plate is made from a single die-cast sheet of aluminum.

**47.** A weighing scale according to any of claim 1 to 45, wherein said deformable plate is formed as a compound structure of at least two iron sheets.

# Fig. 1

(a)

(b)

# Fig. 2

# Fig. 3

(a)

(b)

# Fig. 4

(a)

(b)

# Fig. 5

(a)

(b)

# Fig. 6

# Fig. 7

(a) UPWARDLY OPENED RECTANGULAR TYPE

(b) V SHAPED TYPE

(c) SHALLOW U SHAPED TYPE (1 GAUGE)

(d) U SHAPED TYPE (2 GARGE)

Fig. 8

OUTPUT OF BRIDGE CIRCUIT [μV]

6000

4000

2000

U SHAPED TYPE
(2 GAUGE)

SHALLOW U SHAPED TYPE
(1 GAUGE)

V SHAPED TYPE (1 GAUGE)

UPWARDLY OPENED RECTANGULAR
TYPE (1 GAUGE)

LOAD [Kgf]

150

EP 1 018 639 A1

Fig. 9

(a)

111

39

112

(b)

30

40

240

20    35    240

(c)

202

202

206

240

240

203

202

33

202

(d)

40

240

# Fig. 10

(a)

40

240        240

(b)

202

202

240

240

202        202

(c)

240        240

# Fig. 11

# Fig. 13

# Fig. 12

(a)

(b)

# Fig. 14

(a)

(b)

A–A

(c)

# Fig. 15

(a)

(b)

## Fig. 16

35

161

162

## Fig. 17

40

(a)

301  203  30  226  20

420  227  35

(b)

401  20

410  406  405  35

(c)

226

229  228

229

227

# Fig. 18

# Fig. 19

# Fig. 20

COMPARISON IN A DISPLAY CHANGE BETWEEIN THE BEAN-TYPE WEIGHING SCALE
AND SUPPORTING TYPE WEIGHING SCALE OF THE PRESENT INVENTION (75 KG LOAD)

EP 1 018 639 A1

# Fig. 21

# Fig. 22

# Fig. 23

Fig. 24

EP 1 018 639 A1

## INTERNATIONAL SEARCH REPORT

| International application No. |
| --- |
| PCT/JP99/03072 |

| A. CLASSIFICATION OF SUBJECT MATTER |
| --- |
| Int.Cl⁶ G01G3/14, G01G21/23, 21/28 |

According to International Patent Classification (IPC) or to both national classification and IPC

| B. FIELDS SEARCHED |
| --- |
| Minimum documentation searched (classification system followed by classification symbols) |
| Int.Cl⁶ G01G3/12-14, G01G21/14-16, 21/23, 24, 28, G01L1/22 |

Documentation searched other than minimum documentation to the extent that such documents are included in the fields searched

| | | | | |
| --- | --- | --- | --- | --- |
| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X | JP, 64-43729, A (Teraoka Seiko Co., Ltd.), 16 February, 1989 (16. 02. 89), Figs. 17, 18 | 1-3, 5, 6, 12, 18, 23, 24, 26, 27 |
| X | Figs. 15, 16 | 7, 9-11, 28 |
| X | Figs. 5, 6 | 8, 14-17 |
| X | Fig. 3 | 25 |
| A | Full text ; all drawings (Family: none) | 4, 13, 19-22, 29-45, 47 |
| Y | | 46 |
| | JP, 61-36891, Y2 (Mettler Instrumente AG.), 25 October, 1986 (25. 10. 86), | |
| X | Full text ; all drawings | 1-3, 6, 7, 9-11 |
| A | | 4, 5, 8, 12-45, 47 |
| Y | Page 3, right column, lines 22 to 30 & US, 4381826, A & EP, 50708, B1 | 46 |

| ☐ Further documents are listed in the continuation of Box C. | ☐ See patent family annex. |
| --- | --- |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 12 August, 1999 (12. 08. 99) | 24 August, 1999 (24. 08. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)